(19) Europäisches Patentamt / European Patent Office / Office européen des brevets

(11) **EP 2 369 801 B1**

(12) **EUROPEAN PATENT SPECIFICATION**

(45) Date of publication and mention
of the grant of the patent:
**22.11.2017 Bulletin 2017/47**

(51) Int Cl.:
***H04L 25/03*** *(2006.01)*     ***H04L 25/06*** *(2006.01)*

(21) Application number: **11159476.8**

(22) Date of filing: **23.03.2011**

(54) **Data receiver with improved response to long and short term data signal fading**

Datenempfänger mit verbesserter Antwort auf lang- und kurzfristige Datensignalausblendung

Récepteur de données doté d'une réponse améliorée à un évanouissement de signaux de données à long et à court terme

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.03.2010 GB 201004946**

(43) Date of publication of application:
**28.09.2011 Bulletin 2011/39**

(73) Proprietor: **Pace Plc
Saltaire
Shipley
West Yorkshire BD18 3LF (GB)**

(72) Inventors:
• **Freear, Steven, Dr.
Shipley BD18 3LF (GB)**
• **Sofotasios, Paschalis
Shipley BD18 3LF (GB)**

(74) Representative: **Openshaw & Co.
8 Castle Street
Farnham, Surrey GU9 7HR (GB)**

(56) References cited:
• **COULSON A J ET AL: "Improved fading
distribution for mobile radio", IEE
PROCEEDINGS : COMMUNICATIONS,
INSTITUTION OF ELECTRICAL ENGINEERS, GB,
vol. 145, no. 3, 16 June 1998 (1998-06-16) , pages
197-202, XP006010897, ISSN: 1350-2425, DOI:
10.1049/IP-COM:19981991**
• **GIORGIO TARICCO ED - SAIDI M Y ET AL:
"Optimum Receiver Design and Performance
Analysis for Fully Correlated Rician Fading MIMO
Channels with Imperfect Channel State
Information", GLOBAL TELECOMMUNICATIONS
CONFERENCE, 2007. GLOBECOM '07. IEEE,
IEEE, PISCATAWAY, NJ, USA, 1 November 2007
(2007-11-01), pages 1546-1550, XP031196225,
ISBN: 978-1-4244-1042-2**

**Description**

The invention to which this application relates is a broadcast data receiver apparatus which is provided in a form so as to have an improved response to long and short term fading of the data channels.

The demand for increased capacity in data receiving apparatus, and/or reduced information errors continues to grow and there is also an increasing demand for generally efficient operation of wireless communication systems. However, a fundamental constraint to the capacity of the data transmission and receiving system is one or both of the digital receiver and the propagation medium (i.e the channel on which the data is transmitted).

Broadcast signals which are transmitted are typically distorted by atmospheric and environmental impairments, thereby degrading the quality of the signal which is subsequently received. In general, one form of deterioration is fading which is typically caused by physical phenomena such as reflection, diffraction and scattering. According to the number of the scattering phenomena which may be present in a wireless channel, the effect of these phenomena is either rich or poor. This is the case in the occurrence of multipath and shadowing fading, respectively.

It is known from the theory of telecommunications that multipath fading and shadowing of propagated signals, (also known as short-term fading and long-term fading respectively), can be effectively described and represented by statistical distributions.

Conventionally used distributions such as those known as Rayleigh, Weibull and Nakagami -m, -n, -q distributions, are adequate when describing multipath fading. However, they are found not to be optimal and/or robust because they do not additionally consider the simultaneous occurrence of the shadowing effect.

Another known distribution known as the Suzuki statistical distribution has the advantage that it is a composite Rayleigh/Lognormal distribution. As a consequence, it is capable of describing at once both the multipath and the shadowing of communication signals which occur simultaneously during wireless propagation. However, the probability density function (PDF) of the Suzuki distribution is described by the integral of the synthesis of Lognormal and Rayleigh, distribution. An explicit solution to this integral is not known in the prior art and thus it has not been possible to implement a receiver for a digital data system which is operable over such a fading channel. The document in the name of Coulson AJ et al entitled "Improving fading distribution for mobile radio" Proceedings of IEE, vol.145, no.3, 16 June 1998, pages 197-202 discloses the use of Suzuki distribution in data signal decoding.

An existing method of compensating for shadowing is by providing the receiver with empirical data, i.e. actual data, relating to the geographical area in which the receiver is to be used. However, it is time-consuming to produce such data, the data is not always specific enough to the receiver location, and if the receiver is moved to a new location, new empirical data has to be obtained.

An aim of the present invention is to provide a receiver which can characterise accurately the signal degradation caused by the presence of multipath fading and shadowing. Another aim is to provide a method whereby the characterisation of the signal degradation can be accurately determined.

In one aspect of the invention, there is provided a broadcast receiver, said receiver including processing means used to receive the data signal, wherein the receiver is configured to receive the said data signal with respect to at least one decision metric derived upon utilising the probability density function of a Suzuki distribution of the said data signal in order to take into account potential impairment of the said data signal and the selection of the decision metric used is made with regard to whether any or any combination of values for the phase, delay and/or amplitude of the said data signal is known characterised in that when the phase and delay values are known the decision metric used is

$$\Lambda_k = \ln\left[p\left(\left\{r_l(t)\right\}_{l=1}^{Lp}\Big|s_k(t),\left\{\theta_l\right\}_{l=1}^{Lp},\left\{\tau_l\right\}_{l=1}^{Lp}\right)\right];$$

when only the phase value is known the decision metrics used are

$$\Lambda_k = \ln\left[p\left(\left\{r_l(t)\right\}_{l=1}^{Lp}\Big|s_k(t),\left\{\theta_l\right\}_{l=1}^{Lp}\right)\right] =$$

$$\ln\left(\begin{array}{l} K(B-A)\prod_{l=1}^{L_p}\left(\frac{5}{2}\right)^{\frac{1}{8\sigma^2}}\frac{e^{-\frac{\mu^2}{2\sigma^2}}}{2\sigma\sqrt{2\pi}}\Gamma\left(1-\frac{1}{8\sigma^2}-\frac{\mu}{2\sigma^2}\right)\left[\frac{N_l}{E_k}\right]^{-1+\frac{1+4\mu}{4\sigma^2}}\Gamma\left(\frac{1+4\mu}{8\sigma^2}-\frac{1}{2}\right) \\ {}_1F_1\left(\frac{1+4\mu}{8\sigma^2}-\frac{1}{2},\frac{1}{2},\frac{e^{-j2\theta_l}y_{kl}^2(\tau)}{4E_kN_l}\right)+\left[\frac{e^{-j\theta_l}y_{kl}(\tau)}{N_l}\right]\sqrt{\frac{N_l}{E_k}}\Gamma\left(\frac{1+4\mu}{8\sigma^2}\right){}_1F_1\left(\frac{1+4\mu}{8\sigma^2},\frac{3}{2},\frac{e^{-j2\theta_l}y_{kl}^2(\tau)}{4E_kN_l}\right) \end{array}\right)$$

and

$$\Lambda_k = \ln\left[ p\left( \{r_l(t)\}_{l=1}^{Lp} \,\Big|\, s_k(t), \{\theta_l\}_{l=1}^{Lp} \right) \right] =$$

$$\ln\left( K(B-A)\prod_{l=1}^{L_p} \left(\frac{5}{2}\right)^{\frac{1}{8\sigma^2}} \frac{e^{-\frac{\mu^2}{2\sigma^2}}}{2\sigma\sqrt{2\pi}} \Gamma\left(1 - \frac{1}{8\sigma^2} - \frac{\mu}{2\sigma^2}\right) \left[\frac{N_l}{E_k}\right]^{-1+\frac{1+4\mu}{4\sigma^2}} \Gamma\left(\frac{1+4\mu}{8\sigma^2} - \frac{1}{2}\right) * 2^{1-\frac{1}{8\sigma^2}-\frac{\mu}{2\sigma^2}} \right.$$
$$\left. {}_1F_1\left(\frac{1+4\mu}{8\sigma^2} - \frac{1}{2}, \frac{1}{2}, \frac{e^{-j2\theta_l} y_{kl}^2(\tau)}{4E_k N_l}\right) + \left[\frac{e^{-j\theta_l}|y_{kl}(\tau)|}{N_l}\right]\sqrt{\frac{N_l}{E_k}}\, \Gamma\left(\frac{1+4\mu}{8\sigma^2}\right) {}_1F_1\left(\frac{1+4\mu}{8\sigma^2}, \frac{3}{2}, \frac{e^{-j2\theta_l} y_{kl}^2(\tau)}{4E_k N_l}\right) \right)$$

when the delay and amplitude values are known the decision metric used is

$$\Lambda_k = \ln\left[ p\left( \{r_l(t)\}_{l=1}^{Lp} \,\Big|\, s_k(t), \{\alpha_l\}_{l=1}^{Lp}, \{\tau_l\}_{l=1}^{Lp} \right) \right] = K\sum_{l=1}^{L_p} \ln\left[ e^{-\frac{\alpha_l^2 E_k}{N_l}} I_0\left(\frac{\alpha_l}{N_l}|y_{kl}(\tau_l)|\right) \right]$$

$$\Lambda_k = \ln\left[ p\left( \{r_l(t)\}_{l=1}^{Lp} \,\Big|\, s_k(t), \{\tau_l\}_{l=1}^{Lp} \right) \right];$$

when only the delay value is known the decision metric used is . and
when the delay, amplitude and phase values are unknown the decision metric used is

$$\Lambda_k = \ln\left[ p\left( \{r_l(t)\}_{l=1}^{Lp} \,\Big|\, s_k(t) \right) \right] =$$

$$\ln\left[ K(B-A)\prod_{l=1}^{L_p} \left(\frac{5}{2}\right)^{\frac{1}{8\sigma^2}} \frac{e^{-\frac{\mu^2}{2\sigma^2}}}{\sigma\sqrt{2\pi}} \Gamma\left(1 - \frac{1}{8\sigma^2} - \frac{\mu}{2\sigma^2}\right) \frac{1}{2}\left[\frac{E_k}{N_l}\right]^{-\frac{1+4\mu}{8\sigma^2}} \Gamma\left(\frac{1+4\mu}{8\sigma^2}\right) \right]$$

and

$$\ln\left[ K(B-A)\prod_{l=1}^{L_p} \left(\frac{5}{2}\right)^{\frac{1}{8\sigma^2}} \frac{e^{-\frac{\mu^2}{2\sigma^2}}}{4\sigma\pi\sqrt{2}} \Gamma\left(1 - \frac{1}{8\sigma^2} - \frac{\mu}{2\sigma^2}\right) \left[\frac{E_k}{N_l}\right]^{\frac{1}{4}-\frac{1+4\mu}{8\sigma^2}} 2^{\frac{1}{2}-\frac{1}{8\sigma^2}-\frac{\mu}{2\sigma^2}} \sqrt{\frac{|y_{kl}(\tau_l)|}{N_l}} \right.$$
$$\left. \left(\Gamma\left(\frac{1+4\mu}{8\sigma^2} - \frac{1}{4}\right) {}_1F_1\left(\frac{1+4\mu}{8\sigma^2} - \frac{1}{4}, \frac{1}{2}, \frac{y_{kl}^2(\tau)}{4E_k N_l}\right) - \left[\frac{y_{kl}(\tau)}{\sqrt{E_k N_l}}\right] \Gamma\left(\frac{1+4\mu}{8\sigma^2} + \frac{1}{4}\right) {}_1F_1\left(\frac{1+4\mu}{8\sigma^2} + \frac{1}{4}, \frac{3}{2}, \frac{y_{kl}^2(\tau)}{4E_k N_l}\right)\right) \right]$$

where $S_k(t)$ is the corresponding $k_{th}$ complex baseband signal chosen from the set of M equi-probable message waveforms which represents the transmitted data signal, $L_p$ are the independent diversity paths, and $\{a_l\}_{l=1}^{L_p}$, $\{\theta_l\}_{l=1}^{L_p}$ and $\{\tau_l\}_{l=1}^{L_p}$ are the amplitude, phase and delay values respectively.

Thus the receiver can be optimised in a number of conditions such that the requirement for empirically modelling the channel before deploying a new network is removed. As such the receiver has improved performance over fading channels and is adaptive to the location of the receiver.

In one embodiment the design or configuration of the receiving apparatus include details of coherent detection as well as non-coherent detection.

In one embodiment the designs include details of the possible modulation schemes, typically M-PSK, M-QAM, ASK/PAM, FSK, MSK and OFDM.

In one embodiment the designs include a plurality of shaping pulses, typically square, sinusoidal and cosine.

In one embodiment the broadcast receiver characterises signal impairment optimally by utilising any, or any combination of, the decision metrics described herein.

Typically, according to the level of channel knowledge, the decision metric allows optimisation of the signal reception parameters or design.

In a further aspect of the invention there is provided a method of configuring receiving and/or processing apparatus for at least one data signal received from a remote transmitting location said method including the steps of:

identifying the data signal which is to be received and wherein the said apparatus is further configured with reference to a decision metric derived upon utilising the probability density function of a Suzuki distribution in order to take into account potential impairment of the said data signal and the selection of the decision metric used is made with regard to whether any or any combination of values for the phase, delay and/or amplitude of the said data signal is known characterised in that when the phase and delay values are known the decision metric used is

$$\Lambda_k = \ln\left[ p\left( \{\eta(t)\}_{l=1}^{Lp} \Big| s_k(t), \{\theta_l\}_{l=1}^{Lp}, \{\tau_l\}_{l=1}^{Lp} \right) \right];$$

when only the phase value is known the decision metrics used are

$$\Lambda_k = \ln\left[ p\left( \{\eta(t)\}_{l=1}^{Lp} \Big| s_k(t), \{\theta_l\}_{l=1}^{Lp} \right) \right] =$$

$$\ln\left( K(B-A)\prod_{l=1}^{L_p} \left(\frac{5}{2}\right)^{\frac{1}{8\sigma^2}} \frac{e^{-\frac{\mu^2}{2\sigma^2}}}{2\sigma\sqrt{2\pi}} \Gamma\left(1 - \frac{1}{8\sigma^2} - \frac{\mu}{2\sigma^2}\right) \left[\frac{N_l}{E_k}\right]^{-1+\frac{1+4\mu}{4\sigma^2}} \Gamma\left(\frac{1+4\mu}{8\sigma^2} - \frac{1}{2}\right) \right.$$
$$\left. {}_1F_1\left(\frac{1+4\mu}{8\sigma^2} - \frac{1}{2}, \frac{1}{2}, \frac{e^{-j2\theta_l}y_{kl}^2(\tau)}{4E_k N_l}\right) + \left[\frac{e^{-j\theta_l}|y_{kl}(\tau)|}{N_l}\right]\sqrt{\frac{N_l}{E_k}} \Gamma\left(\frac{1+4\mu}{8\sigma^2}\right) {}_1F_1\left(\frac{1+4\mu}{8\sigma^2}, \frac{3}{2}, \frac{e^{-j2\theta_l}y_{kl}^2(\tau)}{4E_k N_l}\right) \right)$$

and

$$\Lambda_k = \ln\left[ p\left( \{\eta(t)\}_{l=1}^{Lp} \Big| s_k(t), \{\theta_l\}_{l=1}^{Lp} \right) \right] =$$

$$\ln\left( K(B-A)\prod_{l=1}^{L_p} \left(\frac{5}{2}\right)^{\frac{1}{8\sigma^2}} \frac{e^{-\frac{\mu^2}{2\sigma^2}}}{2\sigma\sqrt{2\pi}} \Gamma\left(1 - \frac{1}{8\sigma^2} - \frac{\mu}{2\sigma^2}\right) \left[\frac{N_l}{E_k}\right]^{-1+\frac{1+4\mu}{4\sigma^2}} \Gamma\left(\frac{1+4\mu}{8\sigma^2} - \frac{1}{2}\right) * 2^{1-\frac{1}{8\sigma^2} - \frac{\mu}{2\sigma^2}} \right.$$
$$\left. {}_1F_1\left(\frac{1+4\mu}{8\sigma^2} - \frac{1}{2}, \frac{1}{2}, \frac{e^{-j2\theta_l}y_{kl}^2(\tau)}{4E_k N_l}\right) + \left[\frac{e^{-j\theta_l}|y_{kl}(\tau)|}{N_l}\right]\sqrt{\frac{N_l}{E_k}} \Gamma\left(\frac{1+4\mu}{8\sigma^2}\right) {}_1F_1\left(\frac{1+4\mu}{8\sigma^2}, \frac{3}{2}, \frac{e^{-j2\theta_l}y_{kl}^2(\tau)}{4E_k N_l}\right) \right)$$

when the delay and amplitude values are known the decision metric used is

$$\Lambda_k = \ln\left[ p\left( \{\eta(t)\}_{l=1}^{Lp} \Big| s_k(t), \{\alpha_l\}_{l=1}^{Lp}, \{\tau_l\}_{l=1}^{Lp} \right) \right] = K \sum_{l=1}^{L_p} \ln\left[ e^{-\frac{\alpha_l^2 E_k}{N_l}} I_0\left(\frac{\alpha_l}{N_l}|y_{kl}(\tau_l)|\right) \right]$$

$$\Lambda_k = \ln\left[ p\left( \{r_1(t)\}_{l=1}^{Lp} \middle| s_k(t), \{\tau_l\}_{l=1}^{Lp} \right) \right];$$

when only the delay value is known the decision metric used is .

and

when the delay, amplitude and phase values are unknown the decision metric used is

$$\Lambda_k = \ln\left[ p\left( \{r_1(t)\}_{l=1}^{Lp} \middle| s_k(t) \right) \right] =$$

$$\ln\left[ K(B-A) \prod_{l=1}^{L_p} \left(\frac{5}{2}\right)^{\frac{1}{8\sigma^2}} \frac{e^{-\frac{\mu^2}{2\sigma^2}}}{\sigma\sqrt{2\pi}} \Gamma\left(1 - \frac{1}{8\sigma^2} - \frac{\mu}{2\sigma^2}\right) \right] \frac{1}{2}\left[\frac{E_k}{N_l}\right]^{-\frac{1+4\mu}{8\sigma^2}} \Gamma\left(\frac{1+4\mu}{8\sigma^2}\right)$$

and

$$\ln\left[ K(B-A) \prod_{l=1}^{L_p} \left(\frac{5}{2}\right)^{\frac{1}{8\sigma^2}} \frac{e^{-\frac{\mu^2}{2\sigma^2}}}{4\sigma\pi\sqrt{2}} \Gamma\left(1 - \frac{1}{8\sigma^2} - \frac{\mu}{2\sigma^2}\right)\left[\frac{E_k}{N_l}\right]^{\frac{1}{4}-\frac{1+4\mu}{8\sigma^2}} 2^{\frac{1}{2}-\frac{1}{8\sigma^2}-\frac{\mu}{2\sigma^2}} \sqrt{\frac{|y_{kl}(\tau_l)|}{N_l}} \right. \\ \left. \left(\Gamma\left(\frac{1+4\mu}{8\sigma^2} - \frac{1}{4}\right){}_1F_1\left(\frac{1+4\mu}{8\sigma^2} - \frac{1}{4}, \frac{1}{2}, \frac{y_{kl}^2(\tau)}{4E_k N_l}\right) - \left[\frac{y_{kl}(\tau)}{\sqrt{E_k N_l}}\right]\Gamma\left(\frac{1+4\mu}{8\sigma^2} + \frac{1}{4}\right){}_1F_1\left(\frac{1+4\mu}{8\sigma^2} + \frac{1}{4}, \frac{3}{2}, \frac{y_{kl}^2(\tau)}{4E_k N_l}\right)\right) \right]$$

where $\tilde{S}_k(t)$ is the corresponding $k_{th}$ complex baseband signal chosen from the set of M equi-probable message waveforms which represents the transmitted data signal, $L_p$ are the independent diversity paths, and $\{a_l\}_{l=1}^{L_p}$,

$\{\theta_l\}_{l=1}^{L_p}$ and $\{\tau_l\}_{l=1}^{L_p}$ are the amplitude, phase and delay values respectively

Further details of specific embodiments are now described wherein:-

Figure 1 illustrates a receiver apparatus configuration design for the case of known delay and phase values but unknown amplitude values for a data signal to be received.

Figure 2 illustrates a receiver apparatus configuration design for the case of known phase value but unknown delay and amplitude values for a received data signal.

Figure 3 illustrates a receiver apparatus configuration design for the case of a known delay value but unknown phase and amplitude values of a received data signal.

Figure 4 illustrates a receiver apparatus configuration design for receipt of a data signal for which the delay, phase and amplitude values are unknown.

In the transmission of a data signal to one or more receiver apparatus then during a symbol period of 'Ts' seconds of the data signal the transmitter transmits a real bandpass signal which can be represented as :

$$S_k(t) = \mathrm{Re}\left\{\tilde{s}_k(t)\right\} = \mathrm{Re}\left\{\tilde{S}_k(t)e^{j2\pi f_c t}\right\} \qquad (1)$$

where $\tilde{s}_k$ is the $k_{th}$ complex bandpass signal and $\tilde{S}_k(t)$ is the corresponding $k_{th}$ complex baseband signal chosen from the set of M equi-probable message waveforms which represents the transmitted information.

The above signal (1) is transmitted over the fading channel which is characterized by $L_p$ independent diversity paths. Each of these paths is a time varying channel that attenuates, delays, phase-shifts the signal while it also adds an AWGN source. Thus, the received data signal at the receiving apparatus is in fact a set of "noisy" replicas of the transmitted signal.

It should be noted here that a so-called "one-shot" approach for the transmission of the data signal is assumed to be used herein i.e. a single transmission wherein ISI that would be produced by the presence of the path delays on continuous transmission is ignored. Hence, the received signal will be expressed as follows:

$$r_l(t) = \mathrm{Re}\left\{\alpha_l \tilde{s}_k(t - \tau_l)e^{j\theta_l} + n_l(t)\right\} = \mathrm{Re}\left\{\alpha_l \tilde{S}_k(t - \tau_l)e^{j(2\pi f_c t + \theta_l)} + N_l(t)e^{j2\pi f_c t}\right\} \quad (2)$$

$$\Rightarrow r_l(t) = \mathrm{Re}\left\{\tilde{r}_l(t)\right\} = \mathrm{Re}\left\{\tilde{R}_l(t)e^{j2\pi f_c t}\right\} \qquad l=1, 2, \ldots, L_p \qquad (3)$$

where $\left\{N_l(t)\right\}_{l=1}^{L_p}$ is a set of statistically independent complex Additive White Gaussian Noise (AWGN) processes, each with PSD $2N_1$ Watts/Hertz.

The sets $\left\{a_l\right\}_{l=1}^{L_p}$, $\left\{\theta_l\right\}_{l=1}^{L_p}$ and $\left\{\tau_l\right\}_{l=1}^{L_p}$ are the random channel amplitudes, phases and delays respectively and they are assumed to be constant over one or two symbol periods i.e. $T_s$ and $2T_s$ for non-coherent and coherent detection respectively.

Another important assumption is that $\tau_1 < \tau_2 < \ldots < \tau_{L_p}$. The optimum receiver computes the set of *a posteriori* probabilities $p\left(s_k(t) \middle| \left\{r_l(t)\right\}_{l=1}^{L_p}\right),$ k=1, 2, ..., M and chooses as its decision that message whose signal $s_k(t)$ corresponds to the largest of these probabilities. In addition, the receiver is assumed to be time - synchronised to the transmitted signal.

Since the messages (signals) are assumed to be equi-probable, then, by Bayes' rule, the equivalent decision rule is to choose $s_k(t)$ corresponding to the largest of the conditional probabilities (likelihoods)

$$p\left(\left\{r_l(t)\right\}_{l=1}^{L_p} \middle| s_k(t)\right), \qquad\qquad k=1, 2, \ldots, M$$

which is the Maximum - Likelihood (ML) decision rule. By making use of the law of conditional probability, each of these conditional probabilities can be expressed by equation (4) as follows:

$$\iiint p\left(\left\{r_l(t)\right\}_{l=1}^{L_p} \middle| s_k(t), \left\{\alpha_l\right\}_{l=1}^{L_p}, \left\{\theta_l\right\}_{l=1}^{L_p}, \left\{\tau_l\right\}_{l=1}^{L_p}\right) p\left(\left\{\alpha_l\right\}_{l=1}^{L_p}, \left\{\theta_l\right\}_{l=1}^{L_p}, \left\{\tau_l\right\}_{l=1}^{L_p}\right) d\left\{\alpha_l\right\}_{l=1}^{L_p} d\left\{\theta_l\right\}_{l=1}^{L_p} d\left\{\tau_l\right\}_{l=1}^{L_p}$$

which is dependent upon the degree of knowledge i.e. amount of Channel State Information (CSI) available on the parameter sets $\left\{\alpha_l\right\}_{l=1}^{L_p}, \left\{\theta_l\right\}_{l=1}^{L_p}, \left\{\tau_l\right\}_{l=1}^{L_p}$.

In case that any of the three parameter sets are assumed to be known, then the statistical averages on that set of parameters need not be performed. Of course, in the case where all parameters are assumed to be known to the receiver, none of the statistical averages in (4) need be performed and as a consequence the ML decision rule simplifies to choosing the largest of:

$$p\left(\left\{r_l(t)\right\}_{l=1}^{Lp}\bigg|s_k(t),\left\{\alpha_l\right\}_{l=1}^{Lp},\left\{\theta_l\right\}_{l=1}^{Lp},\left\{\tau_l\right\}_{l=1}^{Lp}\right), \qquad k=1,2,\ \ldots,\ M$$

Receivers that make use of CSI have been termed self-adaptive in that the estimates of the system parameters are utilized to adjust the decision structure, thereby, improving the system performance by adaptation to variation of the channel changes.

Example 1 - Known amplitudes, phases and delays: non-coherent detection

Conditioned on perfect knowledge of the amplitudes, phases and delays, the conditional probability

$$p\left(\left\{r_l(t)\right\}_{l=1}^{Lp}\bigg|s_k(t),\left\{\alpha_l\right\}_{l=1}^{Lp},\left\{\theta_l\right\}_{l=1}^{Lp},\left\{\tau_l\right\}_{l=1}^{Lp}\right)$$

is a joint Gaussian Probability Density Function (PDF) that because of the independence assumption on the additive noise components can be written as:

$$p\left(\left\{r_l(t)\right\}_{l=1}^{Lp}\bigg|s_k(t),\left\{\alpha_l\right\}_{l=1}^{Lp},\left\{\theta_l\right\}_{l=1}^{Lp},\left\{\tau_l\right\}_{l=1}^{Lp}\right)= \qquad (5)$$

$$\prod_{l=1}^{L_p}K_1 e^{-\frac{1}{2N_i}\int_{\tau_l}^{Ts+\tau_l}\left|r_l(t)-\alpha_l\tilde{S}_k(t-\tau_l)e^{j\theta_l}\right|^2 dt} = \prod_{l=1}^{L_p}K_1 e^{-\frac{1}{2N_i}\int_{\tau_l}^{Ts+\tau_l}\left|\tilde{R}_l(t)-\alpha_l\tilde{S}_k(t-\tau_l)e^{j\theta_l}\right|^2 dt}$$

where K is an integration constant. After simplification of equation (5) we obtain:

$$p\left(\left\{r_l(t)\right\}_{l=1}^{Lp}\bigg|s_k(t),\left\{\alpha_l\right\}_{l=1}^{Lp},\left\{\theta_l\right\}_{l=1}^{Lp},\left\{\tau_l\right\}_{l=1}^{Lp}\right)= \qquad (6)$$

$$K\prod_{l=1}^{L_p} e^{\mathrm{Re}\left[\frac{\alpha_l}{N_l}e^{-j\theta_l}y_{kl}(\tau)\right]-\frac{\alpha_l^2 E_k}{N_i}} = K e^{\sum_{l=1}^{L_p}\mathrm{Re}\left[\frac{\alpha_l}{N_l}e^{-j\theta_l}y_{kl}(\tau)\right]-\frac{\alpha_l^2 E_k}{N_i}}$$

where,

$$y_{kl}(\tau) = \int_{\tau_l}^{T_s+\tau_l}\tilde{R}_l(t)\tilde{S}_k^*(t-\tau_l)dt = \int_0^{T_s}\tilde{R}_l(t+\tau_l)\tilde{S}_k^*(t)dt \qquad (7)$$

is the complex cross correlation of the $l_{th}$ received signal and the $k_{th}$ signal waveform and

$$E_k = \frac{1}{2}\int_0^{T_s} \left|\tilde{S}_k(t)\right|^2 dt = \frac{1}{2}\int_{\tau_l}^{T_s+\tau_l} \left|\tilde{S}_k(t-\tau_l)\right|^2 dt \tag{8}$$

is the energy of the $k_{th}$ signal $\tilde{s}_k(t)$. Furthermore, the constant K absorbs all the $K_1$ ,s as well as the factor

$$e^{\sum_{l=1}^{L_p} \frac{1}{2N_l}\int_0^{T_s} |R_l(t)|^2 dt}$$

which is independent of K and thus has no bearing on the decision. Since, the natural logarithm is a monotonic function of its argument, we can equivalently maximize with respect to k and obtain (9) as follows:

$$\Lambda_k = \ln\left[p\left(\{r_l(t)\}_{l=1}^{L_p} \Big| s_k(t) \ \{\alpha_l\}_{l=1}^{L_p} \ \{\theta_l\}_{l=1}^{L_p}, \{\tau_l\}_{l=1}^{L_p}\right)\right] = \tag{9}$$

$$\sum_{l=1}^{L_p} \mathrm{Re}\left[\frac{\alpha_l}{N_l}e^{-j\theta_l}y_{kl}(\tau)\right] - \frac{\alpha_l^2 E_k}{N_l} \tag{10}$$

where K is ignored due to its independence with k.

Example 2 - Known phases and delays, unknown amplitudes: non-coherent detection

When the amplitudes of the received data signal are unknown, then the conditional probability of equation (6), must be averaged over their Joint Probability Density Function (JPDF) to arrive at the decision metric. Assuming independent amplitudes with first-order PDFs $\{p_{\alpha_l}(\alpha_l)\}_{l=1}^{L_p}$ we obtain: equation (11) as follows:

$$p\left(\{r_l(t)\}_{l=1}^{L_p} \Big| s_k(t), \{\theta_l\}_{l=1}^{L_p}, \{\tau_l\}_{l=1}^{L_p}\right) = K\prod_{l=1}^{L_p}\int_0^\infty e^{\mathrm{Re}\left[\frac{\alpha_l}{N_l}e^{-j\theta_l}y_{kl}(\tau)\right] - \frac{\alpha_l^2 E_k}{N_l}} p_{\alpha_l}(\alpha_l)d\alpha_l$$

According to the invention, the PDF of Suzuki distribution is expressed mathematically as:

$$p_{\alpha_l}(\alpha_l) = \left(\frac{5}{2}\right)^{\frac{1}{8\sigma^2}}\frac{\alpha_l e^{-\frac{\mu^2}{2\sigma^2}}}{\sigma\sqrt{2\pi}}\Gamma\left(1 - \frac{1}{8\sigma^2} - \frac{\mu}{2\sigma^2}\right)\left(-\frac{1}{8\sigma^2} - \frac{\alpha_l^2}{2}\right)^{-1+\frac{1}{8\sigma^2}+\frac{\mu}{2\sigma^2}} \tag{12}$$

where,

$\sigma$ = the variance of Lognormal distribution
$\mu$ = mean value of lognormal distribution

Therefore, by inserting equation (12) into equation (11) we obtain analytically:

$$p\left(\left\{r_l(t)\right\}_{l=1}^{Lp}\Big|s_k(t)\left\{\theta_l\right\}_{l=1}^{Lp},\left\{\tau_l\right\}_{l=1}^{Lp}\right)= \tag{13}$$

$$K\prod_{l=1}^{L_p}\int_0^\infty e^{\left[\frac{a_l}{N_l}e^{-j\theta_l}y_{kl}(\tau)\right]-\frac{a_l^2 E_k}{N_l}}\left(\frac{5}{2}\right)^{\frac{1}{8\sigma^2}}\frac{a_l e^{-\frac{\mu^2}{2\sigma^2}}}{\sigma\sqrt{2\pi}}\Gamma\left(1-\frac{1}{8\sigma^2}-\frac{\mu}{2\sigma^2}\right)\left(-\frac{1}{8\sigma^2}-\frac{a_l^2}{2}\right)^{-1+\frac{1}{8\sigma^2}+\frac{\mu}{2\sigma^2}}da_l$$

The integral in (13) can not be solved in closed-form as currently expressed, mainly due to the summation term under the power term. By assuming that

$$\left(\frac{1}{8\sigma^2}+\frac{a_l^2}{2}\right)\approx a_l^2, \qquad\qquad 0\le a_l < 1 \tag{14}$$

and

$$\left(\frac{1}{8\sigma^2}+\frac{a_l^2}{2}\right)\approx \frac{a_l^2}{2}, \qquad\qquad a_l \ge 1 \tag{15}$$

Equation (13) can become respectively,

$$p\left(\left\{r_l(t)\right\}_{l=1}^{Lp}\Big|s_k(t),\left\{\theta_l\right\}_{l=1}^{Lp},\left\{\tau_l\right\}_{l=1}^{Lp}\right)= \tag{16}$$

$$K\prod_{l=1}^{L_p}\int_0^\infty e^{\left[\frac{a_l}{N_l}e^{-j\theta_l}y_{kl}(\tau)\right]-\frac{a_l^2 E_k}{N_l}}\left(\frac{5}{2}\right)^{\frac{1}{8\sigma^2}}\frac{a_l e^{-\frac{\mu^2}{2\sigma^2}}}{\sigma\sqrt{2\pi}}\Gamma\left(1-\frac{1}{8\sigma^2}-\frac{\mu}{2\sigma^2}\right)\left(-a_l^2\right)^{-1+\frac{1}{8\sigma^2}+\frac{\mu}{2\sigma^2}}da_l$$

and

$$p\left(\left\{r_l(t)\right\}_{l=1}^{Lp}\Big|s_k(t),\left\{\theta_l\right\}_{l=1}^{Lp},\left\{\tau_l\right\}_{l=1}^{Lp}\right)= \tag{17}$$

$$K\prod_{l=1}^{L_p}\int_0^\infty e^{\left[\frac{a_l}{N_l}e^{-j\theta_l}y_{kl}(\tau)\right]-\frac{a_l^2 E_k}{N_l}}\left(\frac{5}{2}\right)^{\frac{1}{8\sigma^2}}\frac{a_l e^{-\frac{\mu^2}{2\sigma^2}}}{\sigma\sqrt{2\pi}}\Gamma\left(1-\frac{1}{8\sigma^2}-\frac{\mu}{2\sigma^2}\right)\left(-\frac{a_l^2}{2}\right)^{-1+\frac{1}{8\sigma^2}+\frac{\mu}{2\sigma^2}}da_l$$

The closed-form solution of each of the above two equations are given below as follows

$$p\left(\left\{r_l(t)\right\}_{l=1}^{Lp} \Big| s_k(t), \left\{\theta_l\right\}_{l=1}^{Lp}, \left\{\tau_l\right\}_{l=1}^{Lp}\right) = \tag{18}$$

$$K\prod_{l=1}^{L_p}\left(\frac{5}{2}\right)^{\frac{1}{8\sigma^2}}\frac{e^{-\frac{\mu^2}{2\sigma^2}}}{2\sigma\sqrt{2\pi}}\Gamma\left(1-\frac{1}{8\sigma^2}-\frac{\mu}{2\sigma^2}\right)\left[\frac{N_l}{E_k}\right]^{-1+\frac{1+4\mu}{4\sigma^2}}\Gamma\left(\frac{1+4\mu}{8\sigma^2}-\frac{1}{2}\right)*$$

$${}_1F_1\left(\frac{1+4\mu}{8\sigma^2}-\frac{1}{2},\frac{1}{2},\frac{e^{-j2\theta_l}y_k^2(\tau)}{4E_kN_l}\right)+\left[\frac{e^{-j\theta_l}y_{kl}(\tau)}{N_l}\right]\sqrt{\frac{N_l}{E_k}}\Gamma\left(\frac{1+4\mu}{8\sigma^2}\right){}_1F_1\left(\frac{1+4\mu}{8\sigma^2},\frac{3}{2},\frac{e^{-j2\theta_l}y_l^2(\tau)}{4E_kN_l}\right)$$

and

$$p\left(\left\{r_l(t)\right\}_{l=1}^{Lp} \Big| s_k(t), \left\{\theta_l\right\}_{l=1}^{Lp}, \left\{\tau_l\right\}_{l=1}^{Lp}\right) = \tag{19}$$

$$K\prod_{l=1}^{L_p}\left(\frac{5}{2}\right)^{\frac{1}{8\sigma^2}}\frac{e^{-\frac{\mu^2}{2\sigma^2}}}{2\sigma\sqrt{2\pi}}\Gamma\left(1-\frac{1}{8\sigma^2}-\frac{\mu}{2\sigma^2}\right)\left[\frac{N_l}{E_k}\right]^{-1+\frac{1+4\mu}{4\sigma^2}}\Gamma\left(\frac{1+4\mu}{8\sigma^2}-\frac{1}{2}\right)*2^{1-\frac{1}{8\sigma^2}-\frac{\mu}{2\sigma^2}}$$

$${}_1F_1\left(\frac{1+4\mu}{8\sigma^2}-\frac{1}{2},\frac{1}{2},\frac{e^{-j2\theta_l}y_{kl}^2(\tau)}{4E_kN_l}\right)+\left[\frac{e^{-j\theta_l}y_{kl}(\tau)}{N_l}\right]\sqrt{\frac{N_l}{E_k}}\Gamma\left(\frac{1+4\mu}{8\sigma^2}\right){}_1F_1\left(\frac{1+4\mu}{8\sigma^2},\frac{3}{2},\frac{e^{-j2\theta_l}y_{kl}^2(\tau)}{4E_kN_l}\right)$$

Having managed to obtain (13) in a closed-form, the natural logarithm of it is taken in order to derive the decision metric of a receiver that has knowledge of the delays and phases of a Suzuki fading channel but not amplitudes. Therefore, one obtains:

$$\Lambda_k = \ln\left[p\left(\left\{r_l(t)\right\}_{l=1}^{Lp} \Big| s_k(t), \left\{\theta_l\right\}_{l=1}^{Lp}, \left\{\tau_l\right\}_{l=1}^{Lp}\right)\right] \tag{20}$$

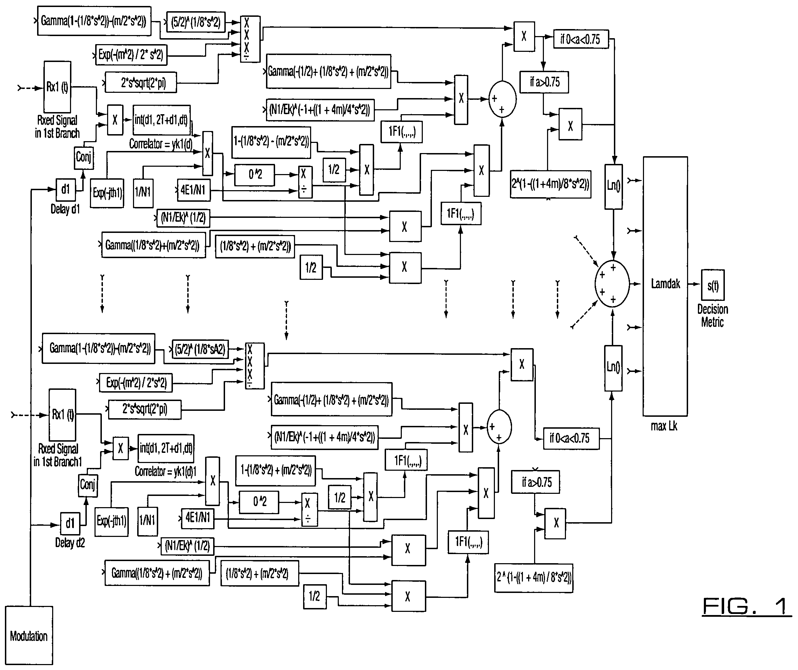

Based on that decision metric the receiver apparatus configuration design illustrated in Figure 1 can be implemented for the case of known delay and phase values but unknown amplitude values for the data signal to be received. This design contains a block that theoretically includes the modulation schemes that can be possibly used. It also contains three different shaping pulses. Furthermore, non - coherent detection as well as uniform PDP are assumed.

Example 3 - Known data signal phase value, unknown data signal delay and amplitude values: non-coherent detection

After deriving successfully the decision metric for the case of known phases and delays but unknown amplitudes, we can derive next the decision metric for the case of known phases but unknown delays and amplitudes. However, it should be mentioned here that in typical practical applications, the fact that the phases are known while the delays are unknown is considered unorthodox. However, in quite narrowband systems (like OFDM) recent developments can make the realisation of such schemes possible. This can actually happen by determining the delays by the phase difference. Therefore, this design will be implemented since such case may attract more attention in future applications.

It is obvious that the difference between the current and the previous scheme is the lack of knowledge of the path delays. Hence, one has to average over the statistics of both amplitude and time, i.e, $p_{\alpha_l}(\alpha_l)$ and $p_{\tau_l}(\tau_l)$.

The former is expressed by equation (12) while the latter is expressed by Alouini - initially Charash- as:

$$p_{\tau_l}(\tau_l) = \frac{1}{B - A}, \qquad A < \tau_l < B \qquad (21)$$

$$p\left(\left\{r_l(t)\right\}_{l=1}^{Lp} \Big| s_k(t), \left\{\theta_l\right\}_{l=1}^{Lp}\right) = K \prod_{l=1}^{L_p} \int_A^B \int_0^\infty e^{\left[\text{Re}\left[\frac{\alpha_l}{N_l} e^{-j\theta_l} y_{kl}(\tau)\right] - \frac{\alpha_l^2 E_k}{N_l}\right]} p_{\alpha_l}(\alpha_l) p_{\tau_l}(\tau_l) d\alpha_l d\tau_l =$$

Thus, the decision metric is expressed mathematically as follows:

$$p\left(\left\{r_l(t)\right\}_{l=1}^{Lp} \Big| s_k(t), \left\{\theta_l\right\}_{l=1}^{Lp}\right) = K \prod_{l=1}^{L_p} \int_A^B p\left(\left\{r_l(t)\right\}_{l=1}^{Lp} \Big| s_k(t), \left\{\theta_l\right\}_{l=1}^{Lp}, \left\{\tau_l\right\}_{l=1}^{Lp}\right) d\tau_l \qquad (22)$$

$$\Lambda_k = \ln\left[p\left(\left\{r_l(t)\right\}_{l=1}^{Lp} \Big| s_k(t), \left\{\theta_l\right\}_{l=1}^{Lp}\right)\right] = \ln\left[K \prod_{l=1}^{L_p} \int_A^B p\left(\left\{r_l(t)\right\}_{l=1}^{Lp} \Big| s_k(t), \left\{\theta_l\right\}_{l=1}^{Lp}, \left\{\tau_l\right\}_{l=1}^{Lp}\right) d\tau_l\right]$$

where the term $\dfrac{1}{B - A}$ from $p_{\tau_l}(\tau_l)$ is absorbed within the constant 'K'.

Therefore, it is straightforward to obtain the closed form expression for the decision metric:

$$\Lambda_k = \ln\left[p\left(\left\{r_l(t)\right\}_{l=1}^{Lp} \Big| s_k(t), \left\{\theta_l\right\}_{l=1}^{Lp}\right)\right] = \qquad (23)$$

$$\ln\left(K(B-A)\prod_{l=1}^{L_p}\left(\frac{5}{2}\right)^{\frac{1}{8\sigma^2}} \frac{e^{-\frac{\mu^2}{2\sigma^2}}}{2\sigma\sqrt{2\pi}} \Gamma\left(1 - \frac{1}{8\sigma^2} - \frac{\mu}{2\sigma^2}\right)\left[\frac{N_l}{E_k}\right]^{-1+\frac{1+4\mu}{4\sigma^2}} \Gamma\left(\frac{1+4\mu}{8\sigma^2} - \frac{1}{2}\right)\right.$$
$$\left._1F_1\left(\frac{1+4\mu}{8\sigma^2} - \frac{1}{2}, \frac{1}{2}, \frac{e^{-j2\theta_l}y_{kl}^2(\tau)}{4E_k N_l}\right) + \left[\frac{e^{-j\theta_l}y_{kl}(\tau)}{N_l}\right]\sqrt{\frac{N_l}{E_k}} \Gamma\left(\frac{1+4\mu}{8\sigma^2}\right) {}_1F_1\left(\frac{1+4\mu}{8\sigma^2}, \frac{3}{2}, \frac{e^{-j2\theta_l}y_{kl}^2(\tau)}{4E_k N_l}\right)\right)$$

and

$$\Lambda_k = \ln\left[p\left(\left\{r_l(t)\right\}_{l=1}^{Lp} \Big| s_k(t), \left\{\theta_l\right\}_{l=1}^{Lp}\right)\right] = \qquad (24)$$

$$\ln\left(K(B-A)\prod_{l=1}^{L_p}\left(\frac{5}{2}\right)^{\frac{1}{8\sigma^2}} \frac{e^{-\frac{\mu^2}{2\sigma^2}}}{2\sigma\sqrt{2\pi}} \Gamma\left(1 - \frac{1}{8\sigma^2} - \frac{\mu}{2\sigma^2}\right)\left[\frac{N_l}{E_k}\right]^{-1+\frac{1+4\mu}{4\sigma^2}} \Gamma\left(\frac{1+4\mu}{8\sigma^2} - \frac{1}{2}\right) * 2^{1-\frac{1}{8\sigma^2}-\frac{\mu}{2\sigma^2}}\right.$$
$$\left._1F_1\left(\frac{1+4\mu}{8\sigma^2} - \frac{1}{2}, \frac{1}{2}, \frac{e^{-j2\theta_l}y_{kl}^2(\tau)}{4E_k N_l}\right) + \left[\frac{e^{-j\theta_l}y_{kl}(\tau)}{N_l}\right]\sqrt{\frac{N_l}{E_k}} \Gamma\left(\frac{1+4\mu}{8\sigma^2}\right) {}_1F_1\left(\frac{1+4\mu}{8\sigma^2}, \frac{3}{2}, \frac{e^{-j2\theta_l}y_{kl}^2(\tau)}{4E_k N_l}\right)\right)$$

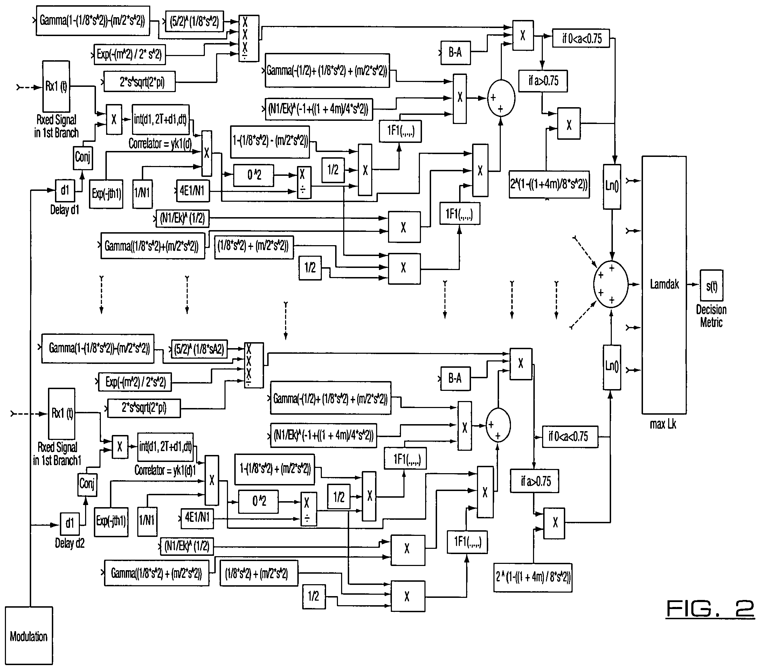

Based on the decision metric expressed by equations (23) and (24), the receiver design illustrated in Figure 2 can be implemented for the case of known phases but unknown delays and amplitudes. As in the above case, this design contains a block that theoretically includes the modulation schemes that can be possibly used together with the shaping pulses. Furthermore, non-coherent detection as well as uniform power decay profile (PDP) have been assumed.

Example 4 -Known delay and amplitude values, unknown phase value: non-coherent detection

In the case of known delay and amplitude values but unknown phase value the scheme is independent of the novel expression for the PDF of Suzuki distribution. However, the analysis of this scheme is vital since the derived results are used in the derivation process of any scheme that the phases are considered unknown.

$$p\left(\left\{r_l(t)\right\}_{l=1}^{Lp} \middle| s_k(t), \left\{\alpha_l\right\}_{l=1}^{Lp}, \left\{\tau_l\right\}_{l=1}^{Lp}\right)$$

When the phases are unknown, then the conditional probability has to be averaged over their joint probability density function (JPDF) in order to arrive at the decision metric. Assuming independent phases with PDFs over the interval {0, $2\pi$}, one obtains:

$$p\left(\left\{r_l(t)\right\}_{l=1}^{Lp} \middle| s_k(t), \left\{\alpha_l\right\}_{l=1}^{Lp}, \left\{\tau_l\right\}_{l=1}^{Lp}\right) = K \prod_{l=1}^{L_p} \int_0^{2\pi} e^{\left[\mathrm{Re}\left[\frac{\alpha_l}{N_l}e^{-j\theta_l}y_{kl}(\tau)\right]-\frac{\alpha_l^2 E_k}{N_l}\right]} p_{\theta_l}(\theta_l)d\theta_l = \quad (25)$$

$$= K \prod_{l=1}^{L_p} e^{-\frac{\alpha_l^2 E_k}{N_l}} \frac{1}{2\pi} \int_0^{2\pi} e^{\left[\mathrm{Re}\left[\frac{\alpha_l}{N_l}e^{-j\theta_l}y_{kl}(\tau)\right]\right]} d\theta_l = \quad (26)$$

$$= K \prod_{l=1}^{L_p} e^{-\frac{\alpha_l^2 E_k}{N_l}} \frac{1}{2\pi} \int_0^{2\pi} e^{\left[\mathrm{Re}\left[\frac{\alpha_l}{N_l}|y_{kl}(\tau)|\cos[\theta_l-\arg(y_{kl}(\tau))]\right]\right]} d\theta_l \Rightarrow \quad (27)$$

$$p\left(\left\{r_l(t)\right\}_{l=1}^{Lp} \middle| s_k(t), \left\{\alpha_l\right\}_{l=1}^{Lp}, \left\{\tau_l\right\}_{l=1}^{Lp}\right) = K \prod_{l=1}^{L_p} e^{-\frac{\alpha_l^2 E_k}{N_l}} I_o\left(\frac{\alpha_l}{N_l}|y_{kl}(\tau_l)|\right) \Rightarrow \quad (28)$$

$$\Lambda_k = \ln\left[p\left(\left\{r_l(t)\right\}_{l=1}^{Lp} \middle| s_k(t), \left\{\alpha_l\right\}_{l=1}^{Lp}, \left\{\tau_l\right\}_{l=1}^{Lp}\right)\right] = K \sum_{l=1}^{L_p} \ln\left[e^{-\frac{\alpha_l^2 E_k}{N_l}} I_o\left(\frac{\alpha_l}{N_l}|y_{kl}(\tau_l)|\right)\right] \quad (29)$$

Example 5 - Known delay values, unknown phase and amplitude values for a received data signal: non-coherent detection

The case of known delay values but unknown phase and amplitude values is perhaps the most critical design to be considered for wireless communication engineering applications and the appropriate configuration of the receiving apparatus for the data signals, and can be derived from the closed form solution for the decision metric of the case of known delays and amplitude values but unknown phase values.
The equation (28) is averaged over the PDF of Suzuki distribution $p_{\alpha_l}(\alpha_l)$. In other words, the mathematical expression of the decision metric of this scheme is the following:

$$p\left(\{\eta(t)\}_{l=1}^{L_p}\Big|s_k(t),\{\tau_l\}_{l=1}^{L_p}\right)=K\prod_{l=1}^{L_p}\oint_0^\infty\int_0^{2\pi}e^{\left[\frac{q}{N}e^{-j\theta_l}y_{kl}(\tau)\right]-\frac{q^2E_k}{N}}p_{\theta_l}(\theta_l)p_{\alpha_l}(\alpha_l)d\theta_l d\alpha_l = \quad (30)$$

$$p\left(\{\eta(t)\}_{l=1}^{L_p}\Big|s_k(t),\{\tau_l\}_{l=1}^{L_p}\right)=K\prod_{l=1}^{L_p}\oint_0^\infty p\left(\{\eta(t)\}_{l=1}^{L_p}\Big|s_k(t),\{\alpha_l\}_{l=1}^{L_p},\{\tau_l\}_{l=1}^{L_p}\right)p_{\alpha_l}(\alpha_l)d\alpha_l = \quad (31)$$

$$p\left(\{\eta(t)\}_{l=1}^{L_p}\Big|s_k(t),\{\tau_l\}_{l=1}^{L_p}\right)=K\prod_{l=1}^{L_p}\oint_0^\infty e^{-\frac{q^2E_k}{N}}I_o\left(\frac{q}{N}|y_{kl}(\tau_l)|\right)p_{\alpha_l}(\alpha_l)d\alpha_l = \quad (32)$$

and by inserting the equation (12) into equation (32) we obtain (33) as follows:

$$p\left(\{\eta(t)\}_{l=1}^{L_p}\Big|s_k(t),\{\tau_l\}_{l=1}^{L_p}\right)= \quad (33)$$

$$K\prod_{l=1}^{L_p}\oint_0^\infty e^{-\frac{q^2E_k}{N}}I_o\left(\frac{q_l}{N}|y_{kl}(\tau_l)|\right)\left(\frac{5}{2}\right)^{\frac{1}{8\sigma^2}}\frac{\alpha_l e^{-\frac{\mu^2}{2\sigma^2}}}{\sigma\sqrt{2\pi}}\Gamma\left(1-\frac{1}{8\sigma^2}-\frac{\mu}{2\sigma^2}\right)\left(-\frac{1}{8\sigma^2}-\frac{\alpha_l^2}{2}\right)^{-1+\frac{1}{8\sigma^2}+\frac{\mu}{2\sigma^2}}d\alpha_l$$

Equation (33) cannot be solved in closed-form as currently expressed. The additional factor of complexity in this case is the modified Bessel function.

In order to simplify the summation term under the power term of Suzuki PDF, two assumptions were made based on the value of $\alpha_l$. The range of values of each of these two assumptions quite coincide with the range of values of the asymptotes of the modified Bessel function. In more detail, the modified Bessel function can be also expressed as:

$$I_b\left(x\right)=\begin{cases}\dfrac{1}{\Gamma(\beta+1)}\left(\dfrac{x}{2}\right)^b,0<x<<\sqrt{b+1}\\[2ex]\dfrac{1}{\sqrt{2\pi x}}e^x,x>>\left|b^2-\dfrac{1}{4}\right|\end{cases} \quad (34)$$

Therefore, by taking into consideration equation (34) as well as the assumptions in (14) and (15), we obtain respectively,

$$p\left(\{r_l(t)\}_{l=1}^{Lp}\Big|s_k(t),\{\tau_l\}_{l=1}^{Lp}\right)= \tag{35}$$

$$K\prod_{l=1}^{L_p}\int_0^\infty e^{-\frac{a_l^2 E_k}{N_l}}\left(\frac{5}{2}\right)^{\frac{1}{8\sigma^2}}\frac{a_l e^{-\frac{\mu^2}{2\sigma^2}}}{\sigma\sqrt{2\pi}}\Gamma\left(1-\frac{1}{8\sigma^2}-\frac{\mu}{2\sigma^2}\right)\left(a_l^2\right)^{-1+\frac{1}{8\sigma^2}+\frac{\mu}{2\sigma^2}}da_l=$$

and

$$K\prod_{l=1}^{L_p}\int_0^\infty e^{-\frac{a_l^2 E_k}{N_l}}\left(\frac{5}{2}\right)^{\frac{1}{8\sigma^2}}\frac{a_l e^{-\frac{\mu^2}{2\sigma^2}}}{\sigma\sqrt{2\pi}}\frac{e^{\frac{a_l}{N_l}|y_{kl}(\tau_l)|}}{\sqrt{2\pi\frac{a_l}{N_l}|y_{kl}(\tau_l)|}}\Gamma\left(1-\frac{1}{8\sigma^2}-\frac{\mu}{2\sigma^2}\right)\left(\frac{a_l^2}{2}\right)^{-1+\frac{1}{8\sigma^2}+\frac{\mu}{2\sigma^2}}da_l$$

which has the following closed-form solutions, i.e.

$$p\left(\{r_l(t)\}_{l=1}^{Lp}\Big|s_k(t),\{\tau_l\}_{l=1}^{Lp}\right)= \tag{36}$$

$$K\prod_{l=1}^{L_p}\left(\frac{5}{2}\right)^{\frac{1}{8\sigma^2}}\frac{e^{-\frac{\mu^2}{2\sigma^2}}}{\sigma\sqrt{2\pi}}\Gamma\left(1-\frac{1}{8\sigma^2}-\frac{\mu}{2\sigma^2}\right)\frac{1}{2}\left[\frac{E_k}{N_l}\right]^{-\frac{1+4\mu}{8\sigma^2}}\Gamma\left(\frac{1+4\mu}{8\sigma^2}\right)$$

and

$$K\prod_{l=1}^{L_p}\left(\frac{5}{2}\right)^{\frac{1}{8\sigma^2}}\frac{e^{-\frac{\mu^2}{2\sigma^2}}}{4\sigma\pi\sqrt{2}}\Gamma\left(1-\frac{1}{8\sigma^2}-\frac{\mu}{2\sigma^2}\right)\left[\frac{E_k}{N_l}\right]^{\frac{1}{4}-\frac{1+4\mu}{8\sigma^2}}2^{\frac{1}{2}-\frac{1}{8\sigma^2}-\frac{\mu}{2\sigma^2}}\sqrt{\frac{|y_{kl}(\tau_l)|}{N_l}}$$

$$\left(\Gamma\left(\frac{1+4\mu}{8\sigma^2}-\frac{1}{4}\right){}_1F_1\left(\frac{1+4\mu}{8\sigma^2}-\frac{1}{4},\frac{1}{2},\frac{y_{kl}^2(\tau)}{4E_k N_l}\right)-\left[\frac{y_{kl}(\tau)}{\sqrt{E_k N_l}}\right]\Gamma\left(\frac{1+4\mu}{8\sigma^2}+\frac{1}{4}\right){}_1F_1\left(\frac{1+4\mu}{8\sigma^2}+\frac{1}{4},\frac{3}{2},\frac{y_{kl}^2(\tau)}{4E_k N_l}\right)\right)$$

and by taking the natural logarithm of (36) we obtain the decision metric for the case of known delays but unknown amplitudes and phases as follows:

$$\Lambda_k=\ln\left[p\left(\{r_l(t)\}_{l=1}^{Lp}\Big|s_k(t),\{\tau_l\}_{l=1}^{Lp}\right)\right] \tag{37}$$

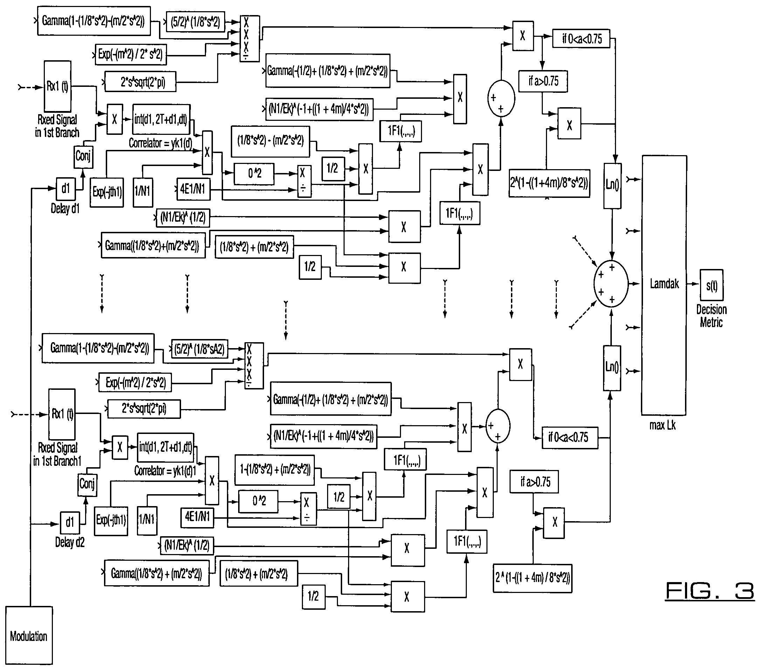

Based on that decision metric the receiver design illustrated in Figure 3 can be implemented for the case of known delays but unknown phases and amplitudes. As in the above case, this design contains a block that theoretically includes the modulation schemes that can be possibly used together with shaping pulses. Furthermore, coherent detection as well as uniform PDP have been selected in this design.

Example 6 -Unknown phase, delay and amplitude values for a received data signal: non-coherent detection

When all channel parameters are unknown, the conditional probability has to be averaged over the statistics of the amplitudes, phases and delays which all are assumed statistically independent. However, since the decision metric has been derived for the case of known delays but unknown amplitudes and phases, we only need to average this metric over the PDF of time. The same methodology was followed above in the case of known phases but unknown amplitudes and delays. Therefore, the following expression must be solved in closed-form:

$$p\left(\left\{r_l(t)\right\}_{l=1}^{L_p}\Big|s_k(t)\right) = \int_A^B p\left(\left\{r_l(t)\right\}_{l=1}^{L_p}\Big|s_k(t),\left\{\tau_l\right\}_{l=1}^{L_p}\right)p_{\tau l}(\tau l)d\tau l \implies \quad (38)$$

$$p\left(\left\{r_l(t)\right\}_{l=1}^{L_p}\Big|s_k(t)\right) = p\left(\left\{r_l(t)\right\}_{l=1}^{L_p}\Big|s_k(t),\left\{\tau_l\right\}_{l=1}^{L_p}\right)\int_A^B p_{\tau l}(\tau l)d\tau l \implies \quad (39)$$

$$\Lambda_k = \ln\left[p\left(\left\{r_l(t)\right\}_{l=1}^{L_p}\Big|s_k(t)\right)\right] = \quad (40)$$

$$\ln\left[K(B-A)\prod_{l=1}^{L_p}\left(\frac{5}{2}\right)^{\frac{1}{8\sigma^2}}\frac{e^{-\frac{\mu^2}{2\sigma^2}}}{\sigma\sqrt{2\pi}}\Gamma\left(1-\frac{1}{8\sigma^2}-\frac{\mu}{2\sigma^2}\right)\right]\frac{1}{2}\left[\frac{E_k}{N_l}\right]^{-\frac{1+4\mu}{8\sigma^2}}\Gamma\left(\frac{1+4\mu}{8\sigma^2}\right)$$

and

$$\ln\left[\begin{array}{c}K(B-A)\prod_{l=1}^{L_p}\left(\frac{5}{2}\right)^{\frac{1}{8\sigma^2}}\frac{e^{\frac{\mu^2}{2\sigma^2}}}{4\sigma\pi\sqrt{2}}\Gamma\left(1-\frac{1}{8\sigma^2}-\frac{\mu}{2\sigma^2}\right)\left[\frac{E_k}{N_l}\right]^{\frac{1}{4}-\frac{1+4\mu}{8\sigma^2}}2^{\frac{1}{2}-\frac{1}{8\sigma^2}-\frac{\mu}{2\sigma^2}}\sqrt{\frac{|y_{kl}(\tau_l)|}{N_l}}\\ \left[\Gamma\left(\frac{1+4\mu}{8\sigma^2}-\frac{1}{4}\right){}_1F_1\left(\frac{1+4\mu}{8\sigma^2}-\frac{1}{4},\frac{1}{2},\frac{y_{kl}^2(\tau)}{4E_kN_l}\right)-\left[\frac{y_{kl}(\tau)}{\sqrt{E_kN_l}}\right]\Gamma\left(\frac{1+4\mu}{8\sigma^2}+\frac{1}{4}\right){}_1F_1\left(\frac{1+4\mu}{8\sigma^2}+\frac{1}{4},\frac{3}{2},\frac{y_{kl}^2(\tau)}{4E_kN_l}\right)\right]\end{array}\right]$$

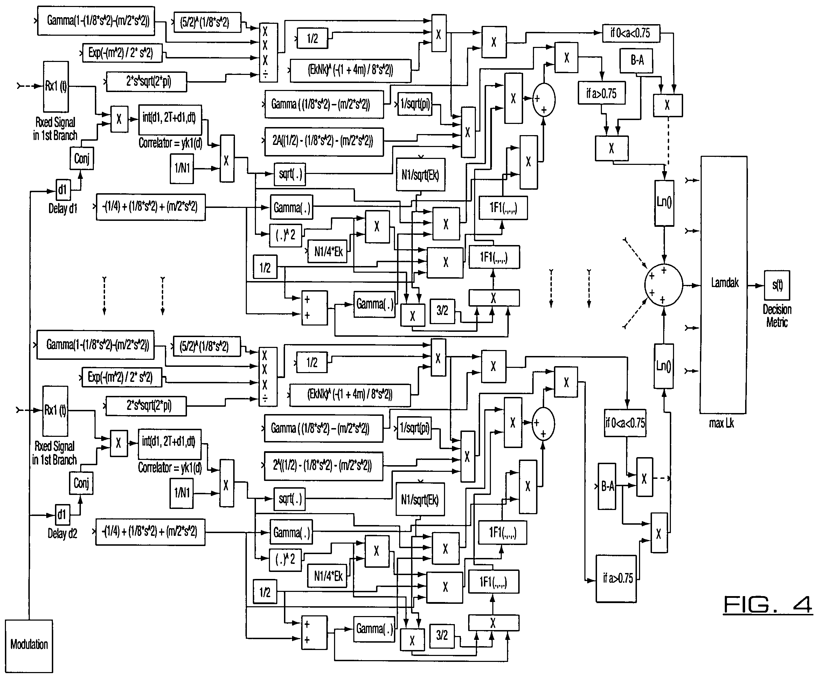

Based on this decision metric we can implement the receiver design as illustrated in Figure 4 for the case of unknown delays, phases and amplitudes. As in the above case, this design contains a block that theoretically includes the modulation schemes that can be possibly used together with the shaping pulses. Furthermore, coherent detection as well as uniform PDP have been selected in this design.

Power Decay Profile

The Power Decay Profile (PDP) critically affects the performance of wireless communications systems and it is always considered as a factor of significant importance during the system design process. In the majority of systems, the PDP is typically considered to be flat i.e. $\Omega_1 = \Omega$; l = 1, 2, ..., $L_p$. The PDP is considered to be of the same nature in all diversity paths between transmitter and receiver.

Uniform PDP indicates the uniform rate of variation of the power of the signal while Exponential PDP indicates its exponential variation. The PDP is described mathematically as follows:

$$\gamma_l = \gamma_1 e^{-\delta(l-1)}, \qquad l = 1, 2, \dots, L_p \qquad (41)$$

$$(SNR_l) = \frac{E_k}{N_l} -$$

where $\gamma_1$ is the signal-to-noise ratio in the 1th diversity path - and $\delta$ is the fading power decay profile factor which typically takes values between zero and two.

In the present case we will consider the values $\delta$ = 0, 0.1, 0.5, 1.0, 2.0, while it is obvious that for $\delta$ = 0, the exponential PDP becomes uniform PDP.

In addition, the nature of the PDP determines the degree of optimisation of a receiver design. For uniform PDP, the receiver design is considered optimum, while, for non-uniform PDP (exponential in our case), the receiver design is considered suboptimum.

Coherent detection

Hereinabove it is assumed that the channel is constant for one symbol period i.e. the detection is considered non-coherent. However, it is well known that coherent detection is always desired ideally. Coherent detection assumes that the channel remains constant for at least two symbol periods. This can be realised mathematically by changing the upper limit of the integral in equation (7) from '$T_s + \tau_1$' to '$2T_s + \tau_1$'. Therefore, only the term '$y_{kl}$' changes and varies proportionally the value decision metric. Hence, this small change of '$T_s$' to '$2T_s$' is the difference between the optimum/suboptimum receiver designs with non-coherent and coherent detection respectively.

Shaping pulses

Using shaping pulses in the transmitter, the data signal which is transmitted can be shaped in a desired waveform which will make it relatively easier for the receiver to filter the received signals effectively and extract the information included in it. The typical shaping pulses that are used are the square, sinusoidal and cosine. These three pulses are expressed mathematically, respectively, as follows:

$$g(t)\big|_r = \sqrt{\frac{2E_b}{T_b}} \qquad (42)$$

$$g(t)\big|_s = \begin{cases} \dfrac{\sin(\pi\tau)}{2T}, & 0 \le t \le 2T \\ \\ 0, & \text{otherwise} \end{cases} \qquad (43)$$

$$g(t)\big|_c = \begin{cases} \dfrac{1}{2LT}\left[1 - \dfrac{\cos(2\pi\tau)}{LT}\right], & 0 \le t \le 2T \\ \\ 0, & \text{otherwise} \end{cases} \qquad (44)$$

where L=1, for full response and L>1 for partial response, result in smaller bandwidth efficiency, hence, greater bandwidth efficiency than the use of rectangular pulses.

Digital modulation schemes

Digital modulation techniques can be an important factor in the transmission of digital data in order to achieve the highest possible data transmission rates. The higher the order of the modulation, the higher the spectral efficiency i.e. the higher the number of bits per transmitted symbol. However, in high order modulation schemes the complexity, and hence, the cost increase dramatically. In addition, the information symbols are located very close to each other which results in inter symbol interference (ISI). This increases the error rate and raises the need for more sophisticated, complex and costly receiver designs. Therefore, the choice of the appropriate modulation scheme for each system is relative to the performance requirements of it. Six types of digital modulations, namely, M-PSK, M-QAM, ASK/PAM, FSK, MSK and OFDM can be expressed mathematically as follows:

*M-PSK*

$$S_k(t)\Big|_{M\text{-PSK}} = g(t)\cos\left[2\pi f_c t + \frac{2\pi}{M}(m-1)\right] \qquad m=1, 2, \ldots, M \qquad (45)$$

where g(t) stands for the shaping pulse, $f_c$ is the carrier frequency, M is the number of symbol states

*M-QAM*

$$S_k(t)\Big|_{M\text{-QAM}} = \text{Re}\left[A_{mc} + jA_{ms}\right]g(t)e^{2\pi f_c t} = \qquad (46)$$

$$= A_{mc}g(t)\cos(2\pi f_c t) - A_{ms}g(t)\sin(2\pi f_c t) \qquad (47)$$

where $A_{mc}$ and $A_{ms}$ stand for the mapping amplitudes in the real and imaginary axis, respectively.

*ASK/PAM*

$$S_k(t)\Big|_{ASK/PAM} = \text{Re}\left[A_m g(t)e^{2\pi f_c t}\right] = \qquad (48)$$

$$= A_m g(t)\cos(2\pi f_c t) \qquad m = 1, 2, \ldots, M \qquad (49)$$

*MSK*

$$S_k(t)\Big|_{MSK} = A_{mc}\cos\left(\frac{\pi}{2}\right)\cos(2\pi f_c t) - A_{ms}\sin\left(\frac{t}{2}\right)\sin(2\pi f_c t) \qquad (50)$$

*FSK*

$$S_k(t)\Big|_{FSK} = g(t)\cos\left[(2\pi f_c t) + 2\pi m\Delta ft\right] \qquad m = 1, 2, \ldots, M \qquad (51)$$

*OFDM*

$$S_k(t)\Big|_{OFDM} = \frac{1}{2}\sum_{k=0}^{N-1} X_k e^{\frac{j2\pi kt}{T}} e^{j2\pi f_c t} \tag{52}$$

where $X_k$ is the $k_{th}$ transmitted symbol and T is the period of each OFDM symbol. $\frac{1}{T}$ stands for the subcarrier spacing and it is actually the factor that provides the orthogonality between the subcarriers consisted within each OFDM.

Thus in accordance with the invention the configuration design of the receiving apparatus can be achieved by referring to the appropriate decision metric. As indicated above and in Figures 1-4, four basic receiver designs are produced directly from the four different derived decision metrics in equations (20), (24), (37), (40).

However, where non-coherent detection is provided in these designs, four modified designs can be produced for the cases of coherent detection.

In addition, the PDP was considered uniform in the four initial designs. Hence receiver designs with coherent and non-coherent detection under exponential PDP can be produced in a straightforward manner. In addition, each of the designs can be changed to take into account the six modulation schemes, and different shaping pulses can be used in all schemes except MSK and OFDM. Therefore, the number of receiver configuration designs which can be achieved are :

4 (Initial) * 4 (modulations) * 2 (PDP) * 2 (detections) * 3 (pulses) [=192]

+ 4 (Initial) * 2 (modulations) * 2 (PDP) * 2 (detections) [=32]

= 112 (optimum) + 112 (suboptimum) = 224 receiver designs

## Claims

1. A broadcast receiver, said receiver including processing means used to receive the data signal, $r_1^{(t)}$ wherein the receiver is configured to receive the said data signal with respect to at least one decision metric derived upon utilising the probability density function of a Suzuki distribution of the said data signal in order to take into account potential impairment of the said data signal and the selection of the decision metric used is made with regard to whether any or any combination of values for the phase, delay and/or amplitude of the said data signal is known **characterised in that** when the phase and delay values are known the decision metric used is

$$\Lambda_k = \ln\left[p\left(\{r_l(t)\}_{l=1}^{L_p} \Big| s_k(t), \{\theta_l\}_{l=1}^{L_p}, \{\tau_l\}_{l=1}^{L_p}\right)\right];$$

when only the phase value is known the decision metrics used are

$$\Lambda_k = \ln\left[p\left(\{r_l(t)\}_{l=1}^{L_p} \Big| s_k(t), \{\theta_l\}_{l=1}^{L_p}\right)\right] =$$

$$\ln\left(\begin{array}{c} K(B-A)\displaystyle\prod_{l=1}^{L_p}\left(\frac{5}{2}\right)^{\frac{1}{8\sigma^2}}\frac{e^{-\frac{\mu^2}{2\sigma^2}}}{2\sigma\sqrt{2\pi}}\Gamma\left(1-\frac{1}{8\sigma^2}-\frac{\mu}{2\sigma^2}\right)\left[\frac{N_l}{E_k}\right]^{-1+\frac{1+4\mu}{4\sigma^2}}\Gamma\left(\frac{1+4\mu}{8\sigma^2}-\frac{1}{2}\right) \\[4mm] {}_1F_1\left(\frac{1+4\mu}{8\sigma^2}-\frac{1}{2},\frac{1}{2},\frac{e^{-j2\theta_l}y_{kl}^2(\tau)}{4E_k N_l}\right)+\left[\frac{e^{-j\theta_l}y_{kl}(\tau)}{N_l}\right]\sqrt{\frac{N_l}{E_k}}\Gamma\left(\frac{1+4\mu}{8\sigma^2}\right){}_1F_1\left(\frac{1+4\mu}{8\sigma^2},\frac{3}{2},\frac{e^{-j2\theta_l}y_{kl}^2(\tau)}{4E_k N_l}\right) \end{array}\right)$$

and

$$\Lambda_k = \ln\left[p\left(\left\{r_l(t)\right\}_{l=1}^{Lp}\Big|s_k(t),\left\{\theta_l\right\}_{l=1}^{Lp}\right)\right] =$$

$$\ln\left(\begin{array}{c} K(B-A)\prod_{l=1}^{L_p}\left(\dfrac{5}{2}\right)^{\frac{1}{8\sigma^2}}\dfrac{e^{-\frac{\mu^2}{2\sigma^2}}}{2\sigma\sqrt{2\pi}}\Gamma\left(1-\dfrac{1}{8\sigma^2}-\dfrac{\mu}{2\sigma^2}\right)\left[\dfrac{N_l}{E_k}\right]^{-1+\frac{1+4\mu}{4\sigma^2}}\Gamma\left(\dfrac{1+4\mu}{8\sigma^2}-\dfrac{1}{2}\right)*2^{1-\frac{1}{8\sigma^2}-\frac{\mu}{2\sigma^2}} \\[2em] {}_1F_1\left(\dfrac{1+4\mu}{8\sigma^2}-\dfrac{1}{2},\dfrac{1}{2},\dfrac{e^{-j2\theta_l}y_{kl}^2(\tau)}{4E_kN_l}\right)+\left[\dfrac{e^{-j\theta_l}y_{kl}(\tau)}{N_l}\right]\sqrt{\dfrac{N_l}{E_k}}\Gamma\left(\dfrac{1+4\mu}{8\sigma^2}\right){}_1F_1\left(\dfrac{1+4\mu}{8\sigma^2},\dfrac{3}{2},\dfrac{e^{-j2\theta_l}y_{kl}^2(\tau)}{4E_kN_l}\right) \end{array}\right)$$

when the delay and amplitude values are known the decision metric used is

$$\Lambda_k = \ln\left[p\left(\left\{r_l(t)\right\}_{l=1}^{Lp}\Big|s_k(t),\left\{\alpha_l\right\}_{l=1}^{Lp},\left\{\tau_l\right\}_{l=1}^{Lp}\right)\right] = K\sum_{l=1}^{L_p}\ln\left[e^{-\frac{\alpha_l^2 E_k}{N_l}}I_o\left(\dfrac{\alpha_l}{N_l}\left|y_{kl}(\tau_l)\right|\right)\right]$$

$$\Lambda_k = \ln\left[p\left(\left\{r_l(t)\right\}_{l=1}^{Lp}\Big|s_k(t),\left\{\tau_l\right\}_{l=1}^{Lp}\right)\right];$$

when only the delay value is known the decision metric used is .
and
when the delay, amplitude and phase values are unknown the decision metric used is

$$\Lambda_k = \ln\left[p\left(\left\{r_l(t)\right\}_{l=1}^{Lp}\Big|s_k(t)\right)\right] =$$

$$\ln\left[K(B-A)\prod_{l=1}^{L_p}\left(\dfrac{5}{2}\right)^{\frac{1}{8\sigma^2}}\dfrac{e^{-\frac{\mu^2}{2\sigma^2}}}{\sigma\sqrt{2\pi}}\Gamma\left(1-\dfrac{1}{8\sigma^2}-\dfrac{\mu}{2\sigma^2}\right)\dfrac{1}{2}\left[\dfrac{E_k}{N_l}\right]^{-\frac{1+4\mu}{8\sigma^2}}\Gamma\left(\dfrac{1+4\mu}{8\sigma^2}\right)\right]$$

and

$$\ln\left[\begin{array}{c} K(B-A)\prod_{l=1}^{L_p}\left(\dfrac{5}{2}\right)^{\frac{1}{8\sigma^2}}\dfrac{e^{-\frac{\mu^2}{2\sigma^2}}}{4\sigma\pi\sqrt{2}}\Gamma\left(1-\dfrac{1}{8\sigma^2}-\dfrac{\mu}{2\sigma^2}\right)\left[\dfrac{E_k}{N_l}\right]^{\frac{1}{4}\frac{1+4\mu}{8\sigma^2}}2^{\frac{1}{2}-\frac{1}{8\sigma^2}-\frac{\mu}{2\sigma^2}}\sqrt{\dfrac{\left|y_{kl}(\tau_l)\right|}{N_l}} \\[2em] \left(\Gamma\left(\dfrac{1+4\mu}{8\sigma^2}-\dfrac{1}{4}\right){}_1F_1\left(\dfrac{1+4\mu}{8\sigma^2}-\dfrac{1}{4},\dfrac{1}{2},\dfrac{y_{kl}^2(\tau)}{4E_kN_l}\right)-\left[\dfrac{y_{kl}(\tau)}{\sqrt{E_kN_l}}\right]\Gamma\left(\dfrac{1+4\mu}{8\sigma^2}+\dfrac{1}{4}\right){}_1F_1\left(\dfrac{1+4\mu}{8\sigma^2}+\dfrac{1}{4},\dfrac{3}{2},\dfrac{y_{kl}^2(\tau)}{4E_kN_l}\right)\right) \end{array}\right]$$

where $s_{k(t)}$ is the corresponding $k_{th}$ complex baseband signal chosen from the set of M equi-probable message waveforms which represents the transmitted data signal, $L_p$ are the independent diversity paths, and $\left\{a_l\right\}_{l=1}^{L_p}$, $\left\{\theta_l\right\}_{l=1}^{L_p}$ and $\left\{\tau_l\right\}_{l=1}^{L_p}$ are the amplitude, phase and delay values respectively, and $\sigma$ and $\mu$ are the variance and mean of the lognormal distribution of impairments of the data signal, and where $Y_{kl}(T)=\int_0^T r_1(t+T)\,s_k^*(t)\,dt$.

2. A broadcast receiver according to claim 1 wherein the receiver is optimised in a plurality of conditions with respect to the geographical location in which the receiver is to be used.

3. A broadcast receiver according to claim 1 wherein the data signal impairment is with respect to the fading of the data signal channel.

4. A broadcast data receiver according to claim 1 wherein the configuration of the receiver includes details relating to coherent detection as well as non-coherent detection.

5. A broadcast receiver according to claim 1 wherein the configuration of the receiver includes details of possible modulation schemes to be used.

6. A broadcast receiver according to claim 1 wherein the receiver is configured to receive data signals which are provided using shaping pulses.

7. A broadcast data receiver including receiving apparatus which has been configured with reference to a decision metric as set out in claim 1.

8. A method of configuring receiving and/or processing apparatus for at least one data signal received from a remote transmitting location, $r_l(t)$, said method including the steps of:

identifying the data signal which is to be received and wherein the said apparatus is further configured with reference to a decision metric derived upon utilising the probability density function of a Suzuki distribution in order to take into account potential impairment of the said data signal and the selection of the decision metric used is made with regard to whether any or any combination of values for the phase, delay and/or amplitude of the said data signal is known **characterised in that** when the phase and delay values are known the decision

$$\Lambda_k = \ln\left[p\left(\left\{r_l(t)\right\}_{l=1}^{Lp}\middle|s_k(t), \left\{\theta_l\right\}_{l=1}^{Lp}, \left\{\tau_l\right\}_{l=1}^{Lp}\right)\right];$$

metric used is

when only the phase value is known the decision metrics used are

$$\Lambda_k = \ln\left[p\left(\left\{r_l(t)\right\}_{l=1}^{Lp}\middle|s_k(t), \left\{\theta_l\right\}_{l=1}^{Lp}\right)\right] =$$

$$\ln\left(K(B-A)\prod_{l=1}^{L_p}\left(\frac{5}{2}\right)^{\frac{1}{8\sigma^2}}\frac{e^{-\frac{\mu^2}{2\sigma^2}}}{2\sigma\sqrt{2\pi}}\Gamma\left(1-\frac{1}{8\sigma^2}-\frac{\mu}{2\sigma^2}\right)\left[\frac{N_l}{E_k}\right]^{-1+\frac{1+4\mu}{4\sigma^2}}\Gamma\left(\frac{1+4\mu}{8\sigma^2}-\frac{1}{2}\right)\right.$$
$$\left.{}_1F_1\left(\frac{1+4\mu}{8\sigma^2}-\frac{1}{2},\frac{1}{2},\frac{e^{-j2\theta_l}y_{kl}^2(\tau)}{4E_k N_l}\right)+\left[\frac{e^{-j\theta_l}y_{kl}(\tau)}{N_l}\right]\sqrt{\frac{N_l}{E_k}}\Gamma\left(\frac{1+4\mu}{8\sigma^2}\right){}_1F_1\left(\frac{1+4\mu}{8\sigma^2},\frac{3}{2},\frac{e^{-j2\theta_l}y_{kl}^2(\tau)}{4E_k N_l}\right)\right)$$

and

$$\Lambda_k = \ln\left[p\left(\left\{r_l(t)\right\}_{l=1}^{Lp}\middle|s_k(t), \left\{\theta_l\right\}_{l=1}^{Lp}\right)\right] =$$

$$\ln\left(K(B-A)\prod_{l=1}^{L_p}\left(\frac{5}{2}\right)^{\frac{1}{8\sigma^2}}\frac{e^{-\frac{\mu^2}{2\sigma^2}}}{2\sigma\sqrt{2\pi}}\Gamma\left(1-\frac{1}{8\sigma^2}-\frac{\mu}{2\sigma^2}\right)\left[\frac{N_l}{E_k}\right]^{-1+\frac{1+4\mu}{4\sigma^2}}\Gamma\left(\frac{1+4\mu}{8\sigma^2}-\frac{1}{2}\right)*2^{1-\frac{1}{8\sigma^2}-\frac{\mu}{2\sigma^2}}\right.$$
$$\left.{}_1F_1\left(\frac{1+4\mu}{8\sigma^2}-\frac{1}{2},\frac{1}{2},\frac{e^{-j2\theta_l}y_{kl}^2(\tau)}{4E_k N_l}\right)+\left[\frac{e^{-j\theta_l}y_{kl}(\tau)}{N_l}\right]\sqrt{\frac{N_l}{E_k}}\Gamma\left(\frac{1+4\mu}{8\sigma^2}\right){}_1F_1\left(\frac{1+4\mu}{8\sigma^2},\frac{3}{2},\frac{e^{-j2\theta_l}y_{kl}^2(\tau)}{4E_k N_l}\right)\right)$$

when the delay and amplitude values are known the decision metric used is

$$\Lambda_k = \ln\left[p\left(\left\{r_l(t)\right\}_{l=1}^{Lp}\Big|s_k(t),\left\{\alpha_l\right\}_{l=1}^{Lp},\left\{\tau_l\right\}_{l=1}^{Lp}\right)\right] = K\sum_{l=1}^{L_p}\ln\left[e^{-\frac{\alpha_l^2 E_k}{N_l}}I_0\left(\frac{\alpha_l}{N_l}\left|y_{kl}\left(\tau_l\right)\right|\right)\right]$$

when only the delay value is known the decision metric used is .

$$\Lambda_k = \ln\left[p\left(\left\{r_l(t)\right\}_{l=1}^{Lp}\Big|s_k(t),\left\{\tau_l\right\}_{l=1}^{Lp}\right)\right];\quad \text{and}$$

when the delay, amplitude and phase values are unknown the decision metric used is

$$\Lambda_k = \ln\left[p\left(\left\{r_l(t)\right\}_{l=1}^{Lp}\Big|s_k(t)\right)\right] =$$

$$\ln\left[K(B-A)\prod_{l=1}^{L_p}\left(\frac{5}{2}\right)^{\frac{1}{8\sigma^2}}\frac{e^{-\frac{\mu^2}{2\sigma^2}}}{\sigma\sqrt{2\pi}}\Gamma\left(1-\frac{1}{8\sigma^2}-\frac{\mu}{2\sigma^2}\right)\frac{1}{2}\left[\frac{E_k}{N_l}\right]^{-\frac{1+4\mu}{8\sigma^2}}\Gamma\left(\frac{1+4\mu}{8\sigma^2}\right)\right]$$

and

$$\ln\left[\begin{array}{c}K(B-A)\prod_{l=1}^{L_p}\left(\frac{5}{2}\right)^{\frac{1}{8\sigma^2}}\frac{e^{\frac{\mu^2}{2\sigma^2}}}{4\sigma\pi\sqrt{2}}\Gamma\left(1-\frac{1}{8\sigma^2}-\frac{\mu}{2\sigma^2}\right)\left[\frac{E_k}{N_l}\right]^{\frac{1}{4}-\frac{1+4\mu}{8\sigma^2}}2^{\frac{1}{2}-\frac{1}{8\sigma^2}-\frac{\mu}{2\sigma^2}}\sqrt{\frac{\left|y_{kl}\left(\tau_l\right)\right|}{N_l}}\\ \left(\Gamma\left(\frac{1+4\mu}{8\sigma^2}-\frac{1}{4}\right){}_1F_1\left(\frac{1+4\mu}{8\sigma^2}-\frac{1}{4},\frac{1}{2},\frac{y_{kl}^2(\tau)}{4E_kN_l}\right)-\left[\frac{y_{kl}(\tau)}{\sqrt{E_kN_l}}\right]\Gamma\left(\frac{1+4\mu}{8\sigma^2}+\frac{1}{4}\right){}_1F_1\left(\frac{1+4\mu}{8\sigma^2}+\frac{1}{4},\frac{3}{2},\frac{y_{kl}^2(\tau)}{4E_kN_l}\right)\right)\end{array}\right]$$

where $s_k(t)$ is the corresponding $k_{th}$ complex baseband signal chosen from the set of M equi-probable message waveforms which represents the transmitted data signal, $L_p$ are the independent diversity paths, and

$\left\{a_l\right\}_{l=1}^{L_p}$, $\left\{\theta_l\right\}_{l=1}^{L_p}$ and $\left\{\tau_l\right\}_{l=1}^{L_p}$ are the amplitude, phase and delay values respectively, and $\sigma$ and $\mu$ are the variance and mean respectively of the lognormal distribution of impairments of the data signal, and where $y_{kl}(T)=\int_0^T r_l(t+T)s_k^*(t)dt$.

**9.** A method according to claim 8 wherein the method includes the step of identifying the geographical location at which the said apparatus is to be used.

**Patentansprüche**

**1.** Rundfunkempfänger, wobei der genannte Empfänger Verarbeitungsmittel zum Empfangen des Datensignals $r_1(t)$ umfasst, wobei der Empfänger zum Empfangen des genannten Datensignals mit Bezug auf wenigstens eine Entscheidungsmetrik konfiguriert ist, abgeleitet nach dem Anwenden der Wahrscheinlichkeitsdichtefunktion einer Suzuki-Verteilung des genannten Datensignals, um eine potentielle Beeinträchtigung des genannten Datensignals zu berücksichtigen, und die Auswahl der benutzten Entscheidungsmetrik mit Bezug darauf erfolgt, ob ein Wert oder eine beliebige Kombination von Werten für die Phase, Verzögerung und/oder Amplitude des genannten Datensignals bekannt ist, **dadurch gekennzeichnet, dass**, wenn die Phasen-und Verzögerungswerte bekannt sind, die folgende Entscheidungsmetrik benutzt wird:

$$\Lambda_k = \ln\left[ p\left( \{r_l(t)\}_{l=1}^{Lp} \Big| s_k(t), \{\theta_l\}_{l=1}^{Lp}, \{\tau_l\}_{l=1}^{Lp} \right) \right];$$

wenn nur der Phasenwert bekannt ist, dann werden die folgenden Entscheidungsmetriken benutzt:

$$\Lambda_k = \ln\left[ p\left( \{r_l(t)\}_{l=1}^{Lp} \Big| s_k(t), \{\theta_l\}_{l=1}^{Lp} \right) \right] =$$

$$\ln\left( \begin{array}{l} K(B-A)\prod_{l=1}^{L_p}\left(\frac{5}{2}\right)^{\frac{1}{8\sigma^2}}\frac{e^{-\frac{\mu^2}{2\sigma^2}}}{2\sigma\sqrt{2n}}\Gamma\left(1-\frac{1}{8\sigma^2}-\frac{\mu}{2\sigma^2}\right)\left[\frac{N_l}{E_k}\right]^{-1+\frac{1+4\mu}{4\sigma^2}}\Gamma\left(\frac{1+4\mu}{8\sigma^2}-\frac{1}{2}\right) \\[2mm] {}_1F_1\left(\frac{1+4\mu}{8\sigma^2}-\frac{1}{2},\frac{1}{2},\frac{e^{-j2\theta_l}y_w^2(\tau)}{4E_kN_l}\right)+\left[\frac{e^{-j\theta_l}y_{kl}(\tau)}{N_l}\right]\sqrt{\frac{N_l}{E_k}}\Gamma\left(\frac{1+4\mu}{8\sigma^2}\right){}_1F_1\left(\frac{1+4\mu}{8\sigma^2},\frac{3}{2},\frac{e^{-j2\theta_l}y_w^2(\tau)}{4E_kN_l}\right) \end{array} \right)$$

und

$$\Lambda_k = \ln\left[ p\left( \{r_l(t)\}_{l=1}^{Lp} \Big| s_k(t), \{\theta_l\}_{l=1}^{Lp} \right) \right] =$$

$$\ln\left( \begin{array}{l} K(B-A)\prod_{l=1}^{L_p}\left(\frac{5}{2}\right)^{\frac{1}{8\sigma^2}}\frac{e^{-\frac{\mu^2}{2\sigma^2}}}{2\sigma\sqrt{2n}}\Gamma\left(1-\frac{1}{8\sigma^2}-\frac{\mu}{2\sigma^2}\right)\left[\frac{N_l}{E_k}\right]^{-1+\frac{1+4\mu}{4\sigma^2}}\Gamma\left(\frac{1+4\mu}{8\sigma^2}-\frac{1}{2}\right)*2^{1-\frac{1}{8\sigma^2}-\frac{\mu}{2\sigma^2}} \\[2mm] {}_1F_1\left(\frac{1+4\mu}{8\sigma^2}-\frac{1}{2},\frac{1}{2},\frac{e^{-j2\theta_l}y_w^2(\tau)}{4E_kN_l}\right)+\left[\frac{e^{-j\theta_l}y_{kl}(\tau)}{N_l}\right]\sqrt{\frac{N_l}{E_k}}\Gamma\left(\frac{1+4\mu}{8\sigma^2}\right){}_1F_1\left(\frac{1+4\mu}{8\sigma^2},\frac{3}{2},\frac{e^{-j2\theta_l}y_w^2(\tau)}{4E_kN_l}\right) \end{array} \right)$$

wenn die Verzögerungs- und Amplitudenwerte bekannt sind, dann wird die folgende Entscheidungsmetrik benutzt:

$$\Lambda_k = \ln\left[ p\left( \{r_l(t)\}_{l=1}^{Lp} \Big| s_k(t), \{a_l\}_{l=1}^{Lp}, \{\tau_l\}_{l=1}^{Lp} \right) \right] = K\sum_{l=1}^{L_p}\ln\left[ e^{-\frac{a_l^2 E_k}{N_l}}I_o\left(\frac{a_l}{N_l}|y_{kl}(\tau_l)|\right) \right]$$

wenn nur der Verzögerungswert bekannt ist, dann wird die folgende Entscheidungsmetrik benutzt:

$$\Lambda_k = \ln\left[ p\left( \{r_l(t)\}_{l=1}^{Lp} \Big| s_k(t), \{\tau_l\}_{l=1}^{Lp} \right) \right];$$

und
wenn die Verzögerungs-, Amplituden- und Phasenwerte unbekannt sind, dann wird die folgende Entscheidungsmetrik benutzt:

$$\Lambda_k = \ln\left[p\left(\{\eta(t)\}_{l=1}^{Lp}\Big|s_k(t)\right)\right] =$$

$$\ln\left[K(B-A)\prod_{l=1}^{L_p}\left(\frac{5}{2}\right)^{\frac{1}{8\sigma^2}}\frac{e^{-\frac{\mu^2}{2\sigma^2}}}{\sigma\sqrt{2\pi}}\Gamma\left(1-\frac{1}{8\sigma^2}-\frac{\mu}{2\sigma^2}\right)\right]\frac{1}{2}\left[\frac{E_k}{N_l}\right]^{-\frac{1+4\mu}{8\sigma^2}}\Gamma\left(\frac{1+4\mu}{8\sigma^2}\right)$$

und

$$\ln\left[\begin{array}{c}K(B-A)\prod_{l=1}^{L_p}\left(\frac{5}{2}\right)^{\frac{1}{8\sigma^2}}\frac{e^{\frac{\mu^2}{2\sigma^2}}}{4\sigma\pi\sqrt{2}}\Gamma\left(1-\frac{1}{8\sigma^2}-\frac{\mu}{2\sigma^2}\right)\left[\frac{E_k}{N_l}\right]^{\frac{1}{4}-\frac{1+4\mu}{8\sigma^2}}2^{\frac{1}{2}-\frac{1}{8\sigma^2}-\frac{\mu}{2\sigma^2}}\sqrt{\frac{|y_{kl}(\tau_l)|}{N_l}} \\ \left[\Gamma\left(\frac{1+4\mu}{8\sigma^2}-\frac{1}{4}\right)_1F_1\left(\frac{1+4\mu}{8\sigma^2}-\frac{1}{4},\frac{1}{2},\frac{y_{kl}^2(\tau_l)}{4E_kN_l}\right)-\left[\frac{y_{kl}(\tau_l)}{\sqrt{E_kN_l}}\right]\Gamma\left(\frac{1+4\mu}{8\sigma^2}+\frac{1}{4}\right)_1F_1\left(\frac{1+4\mu}{8\sigma^2}+\frac{1}{4},\frac{3}{2},\frac{y_{kl}^2(\tau_l)}{4E_kN_l}\right)\right]\end{array}\right]$$

wobei $s_k(t)$ das entsprechende k-te komplexe Basisbandsignal ist, ausgewählt aus dem Satz von M gleichwahrscheinlichen Nachrichtenwellenformen, der das gesendete Datensignal repräsentiert, $L_p$ die unabhängigen Diversity-Pfade sind, und $\{a_l\}_{l=1}^{L_p}$, $\{\theta_l\}_{l=1}^{L_p}$ und $\{\tau_l\}_{l=1}^{L_p}$ jeweils die Amplituden-, Phasen- und Verzögerungswerte sind, und $\sigma$ und $\mu$ die Varianz und das Mittel der Lognormalverteilung von Beeinträchtigungen des Datensignals sind, und wobei $y_{kl}(T)=\int_0^T r_l(t+T)s_k^*(t)dt$ ist.

2. Rundfunkempfänger nach Anspruch 1, wobei der Empfänger in eine Mehrzahl von Bedingungen mit Bezug auf den geografischen Ort optimiert wird, an dem der Empfänger benutzt werden soll.

3. Rundfunkempfänger nach Anspruch 1, wobei sich die Datensignalbeeinträchtigung auf das Fading des Datensignalkanals bezieht.

4. Rundfunkdatenempfänger nach Anspruch 1, wobei die Konfiguration des Empfängers Details in Bezug auf kohärente Erkennung sowie auf nicht-kohärente Erkennung beinhaltet.

5. Rundfunkempfänger nach Anspruch 1, wobei die Konfiguration des Empfängers Details von möglichen zu verwendenden Modulationsschemata beinhaltet.

6. Rundfunkempfänger nach Anspruch 1, wobei der Empfänger zum Empfangen von Datensignalen konfiguriert ist, die mittels Formungspulsen bereitgestellt werden.

7. Rundfunkdatenempfänger mit einer Empfangsvorrichtung, die mit Bezug auf eine Entscheidungsmetrik gemäß Anspruch 1 konfiguriert wurde.

8. Verfahren zum Konfigurieren einer Empfangs- und/oder Verarbeitungsvorrichtung für wenigstens ein von einem fernen Sendeort $r_1(t)$ empfangenes Datensignal, wobei das genannte Verfahren die folgenden Schritte beinhaltet:

Identifizieren des Datensignals, das zu empfangen ist, und wobei die genannte Vorrichtung ferner mit Bezug auf eine Entscheidungsmetrik konfiguriert ist, abgeleitet nach dem Anwenden der Wahrscheinlichkeitsdichtefunktion einer Suzuki-Verteilung, um eine potentiale Beeinträchtigung des genannten Datensignals zu berücksichtigen, und die Auswahl der benutzten Entscheidungsmetrik je nachdem getroffen wird, ob ein Wert oder eine beliebige Kombination von Werten für die Phase, Verzögerung und/oder Amplitude des genannten Datensignals bekannt ist, **dadurch gekennzeichnet, dass**, wenn die Phasen- und Verzögerungswerte bekannt sind, die folgende Entscheidungsmetrik benutzt wird:

$$\Lambda_k = \ln\left[ p\left( \{\eta(t)\}_{l=1}^{Lp} \Big| s_k(t), \{\theta_l\}_{l=1}^{Lp}, \{\tau_l\}_{l=1}^{Lp} \right) \right];$$

wenn nur der Phasenwert bekannt ist, die folgenden Entscheidungsmetriken benutzt werden:

$$\Lambda_k = \ln\left[ p\left( \{\eta(t)\}_{l=1}^{Lp} \Big| s_k(t), \{\theta_l\}_{l=1}^{Lp} \right) \right] =$$

$$\ln\left( \begin{array}{c} K(B-A)\prod_{l=1}^{L_p} \left(\frac{5}{2}\right)^{\frac{1}{8\sigma^2}} \frac{e^{-\frac{\mu^2}{2\sigma^2}}}{2\sigma\sqrt{2n}} \Gamma\left(1 - \frac{1}{8\sigma^2} - \frac{\mu}{2\sigma^2}\right) \left[\frac{N_l}{E_k}\right]^{-1+\frac{1+4\mu}{4\sigma^2}} \Gamma\left(\frac{1+4\mu}{8\sigma^2} - \frac{1}{2}\right) \\[2ex] {}_1F_1\left(\frac{1+4\mu}{8\sigma^2} - \frac{1}{2}, \frac{1}{2}, \frac{e^{-j2\theta_l}y_u^2(\tau)}{4E_lN_l}\right) + \left[\frac{e^{-j\theta_l}y_{kl}(\tau)}{N_l}\right]\sqrt{\frac{N_l}{E_k}}\Gamma\left(\frac{1+4\mu}{8\sigma^2}\right){}_1F_1\left(\frac{1+4\mu}{8\sigma^2}, \frac{3}{2}, \frac{e^{-j2\theta_l}y_u^2(\tau)}{4E_lN_l}\right) \end{array} \right)$$

und

$$\Lambda_k = \ln\left[ p\left( \{\eta(t)\}_{l=1}^{Lp} \Big| s_k(t), \{\theta_l\}_{l=1}^{Lp} \right) \right] =$$

$$\ln\left( \begin{array}{c} K(B-A)\prod_{l=1}^{L_p} \left(\frac{5}{2}\right)^{\frac{1}{8\sigma^2}} \frac{e^{-\frac{\mu^2}{2\sigma^2}}}{2\sigma\sqrt{2n}} \Gamma\left(1 - \frac{1}{8\sigma^2} - \frac{\mu}{2\sigma^2}\right) \left[\frac{N_l}{E_k}\right]^{-1+\frac{1+4\mu}{4\sigma^2}} \Gamma\left(\frac{1+4\mu}{8\sigma^2} - \frac{1}{2}\right) * 2^{1-\frac{1}{8\sigma^2} - \frac{\mu}{2\sigma^2}} \\[2ex] {}_1F_1\left(\frac{1+4\mu}{8\sigma^2} - \frac{1}{2}, \frac{1}{2}, \frac{e^{-j2\theta_l}y_u^2(\tau)}{4E_lN_l}\right) + \left[\frac{e^{-j\theta_l}y_{kl}(\tau)}{N_l}\right]\sqrt{\frac{N_l}{E_k}}\Gamma\left(\frac{1+4\mu}{8\sigma^2}\right){}_1F_1\left(\frac{1+4\mu}{8\sigma^2}, \frac{3}{2}, \frac{e^{-j2\theta_l}y_u^2(\tau)}{4E_lN_l}\right) \end{array} \right)$$

wenn die Verzögerungs- und Amplitudenwerte bekannt sind, dann wird die folgende Entscheidungsmetrik benutzt:

$$\Lambda_k = \ln\left[ p\left( \{\eta(t)\}_{l=1}^{Lp} \Big| s_k(t), \{\alpha_l\}_{l=1}^{Lp}, \{\tau_l\}_{l=1}^{Lp} \right) \right] = K\sum_{l=1}^{L_p} \ln\left[ e^{-\frac{\alpha_l^2 E_k}{N_l}} I_0\left(\frac{\alpha_l}{N_l}|y_{kl}(\tau_l)|\right) \right]$$

wenn nur der Verzögerungswert bekannt ist, dann wird die folgende Entscheidungsmetrik benutzt:

$$\Lambda_k = \ln\left[ p\left( \{\eta(t)\}_{l=1}^{Lp} \Big| s_k(t), \{\tau_l\}_{l=1}^{Lp} \right) \right];$$

und
wenn die Verzögerungs-, Amplituden- und Phasenwerte unbekannt sind, dann wird die folgende Entscheidungsmetrik benutzt:

$$\Lambda_k = \ln\left[p\left(\{r_l(t)\}_{l=1}^{Lp}\Big|s_k(t)\right)\right] =$$

$$\ln\left[K(B-A)\prod_{l=1}^{L_p}\left(\frac{5}{2}\right)^{\frac{1}{8\sigma^2}}\frac{e^{-\frac{\mu^2}{2\sigma^2}}}{\sigma\sqrt{2\pi}}\Gamma\left(1-\frac{1}{8\sigma^2}-\frac{\mu}{2\sigma^2}\right)\right]\frac{1}{2}\left[\frac{E_k}{N_l}\right]^{-\frac{1+4\mu}{8\sigma^2}}\Gamma\left(\frac{1+4\mu}{8\sigma^2}\right)$$

und

$$\ln\left[\begin{array}{l}K(B-A)\prod_{l=1}^{L_p}\left(\frac{5}{2}\right)^{\frac{1}{8\sigma^2}}\frac{e^{\frac{\mu^2}{2\sigma^2}}}{4\sigma\pi\sqrt{2}}\Gamma\left(1-\frac{1}{8\sigma^2}-\frac{\mu}{2\sigma^2}\right)\left[\frac{E_k}{N_l}\right]^{\frac{1}{4}\frac{1+4\mu}{8\sigma^2}}2^{\frac{1}{2}\frac{1}{8\sigma^2}-\frac{\mu}{2\sigma^2}}\sqrt{\frac{|y_{kl}(\tau_l)|}{N_l}} \\ \left[\Gamma\left(\frac{1+4\mu}{8\sigma^2}-\frac{1}{4}\right){}_1F_1\left(\frac{1+4\mu}{8\sigma^2}-\frac{1}{4},\frac{1}{2},\frac{y_{kl}^2(\tau)}{4E_kN_l}\right)-\left[\frac{y_{kl}(\tau)}{\sqrt{E_kN_l}}\right]\Gamma\left(\frac{1+4\mu}{8\sigma^2}+\frac{1}{4}\right){}_1F_1\left(\frac{1+4\mu}{8\sigma^2}+\frac{1}{4},\frac{3}{2},\frac{y_{kl}^2(\tau)}{4E_kN_l}\right)\right]\end{array}\right]$$

wobei $S_k(t)$ das entsprechende k-te komplexe Basisbandsignal ist, ausgewählt aus dem Satz von M gleichwahrscheinlichen Nachrichtenwellenformen, die das gesendete Datensignal repräsentieren, $L_p$ die unabhängigen Diversity-Pfade sind und $\{a_l\}_{l=1}^{L_p}$, $\{\theta_l\}_{l=1}^{L_p}$ und $\{\tau_l\}_{l=1}^{L_p}$ jeweils die Amplituden-, Phasen- und Verzögerungswerte sind, und $\sigma$ und $\mu$ jeweils die Varianz und das Mittel der Lognormalverteilung von Beeinträchtigungen des Datensignals sind, und wobei $y_{kl}(T)=\int_0^T r_l(t+T)s_k^*(t)dt$ ist.

9. Verfahren nach Anspruch 8, wobei das Verfahren den Schritt des Identifizierens des geografischen Orts beinhaltet, an dem die genannte Vorrichtung benutzt werden soll.

## Revendications

1. Récepteur de diffusion, ledit récepteur comprenant un moyen de traitement utilisé pour recevoir le signal de données, $r_1(t)$ dans lequel le récepteur est configuré pour recevoir ledit signal de données par rapport à au moins une métrique de décision dérivée de l'utilisation de la fonction de densité de probabilité d'une distribution de Suzuki dudit signal de données de façon à prendre en compte une déficience potentielle dudit signal de données et la sélection de la métrique de décision utilisée porte sur la question de savoir si toute valeur ou toute combinaison de valeurs pour la phase, le délai et/ou l'amplitude dudit signal de données est connue, **caractérisé en ce que** lorsque les valeurs de phase et de délai sont connues la métrique de décision utilisée est

$$\Lambda_k = \ln\left[p\left(\{r_l(t)\}_{l=1}^{Lp}\Big|s_k(t),\{\theta_l\}_{l=1}^{Lp},\{\tau_l\}_{l=1}^{Lp}\right)\right]$$

lorsque seule la valeur de phase est connue les métriques de décision utilisées sont

$$\Lambda_k = \ln\left[ p\left( \{r_l(t)\}_{l=1}^{L\rho} \mid s_k(t), \{\theta_l\}_{l=1}^{L\rho} \right) \right] =$$

$$\ln\left( K(B-A)\prod_{l=1}^{L_p} \left(\frac{5}{2}\right)^{\frac{1}{8\sigma^2}} \frac{e^{-\frac{\mu^2}{2\sigma^2}}}{2\sigma\sqrt{2\pi}} \Gamma\left(1 - \frac{1}{8\sigma^2} - \frac{\mu}{2\sigma^2}\right)\left[\frac{N_l}{E_k}\right]^{-1+\frac{1+4\mu}{4\sigma^2}} \Gamma\left(\frac{1+4\mu}{8\sigma^2} - \frac{1}{2}\right) \right.$$
$$\left. {}_1F_1\left(\frac{1+4\mu}{8\sigma^2} - \frac{1}{2}, \frac{1}{2}, \frac{e^{-j2\theta_l}y_{kl}^2(\tau)}{4E_kN_l}\right) + \left[\frac{e^{-j\theta_l}y_{kl}(\tau)}{N_l}\right]\sqrt{\frac{N_l}{E_k}}\Gamma\left(\frac{1+4\mu}{8\sigma^2}\right){}_1F_1\left(\frac{1+4\mu}{8\sigma^2}, \frac{3}{2}, \frac{e^{-j2\theta_l}y_{kl}^2(\tau)}{4E_kN_l}\right) \right)$$

et

$$\Lambda_k = \ln\left[ p\left( \{r_l(t)\}_{l=1}^{L\rho} \mid s_k(t), \{\theta_l\}_{l=1}^{L\rho} \right) \right] =$$

$$\ln\left( K(B-A)\prod_{l=1}^{L_p} \left(\frac{5}{2}\right)^{\frac{1}{8\sigma^2}} \frac{e^{-\frac{\mu^2}{2\sigma^2}}}{2\sigma\sqrt{2\pi}} \Gamma\left(1 - \frac{1}{8\sigma^2} - \frac{\mu}{2\sigma^2}\right)\left[\frac{N_l}{E_k}\right]^{-1+\frac{1+4\mu}{4\sigma^2}} \Gamma\left(\frac{1+4\mu}{8\sigma^2} - \frac{1}{2}\right) * 2^{1-\frac{1}{8\sigma^2}-\frac{\mu}{2\sigma^2}} \right.$$
$$\left. {}_1F_1\left(\frac{1+4\mu}{8\sigma^2} - \frac{1}{2}, \frac{1}{2}, \frac{e^{-j2\theta_l}y_{kl}^2(\tau)}{4E_kN_l}\right) + \left[\frac{e^{-j\theta_l}y_{kl}(\tau)}{N_l}\right]\sqrt{\frac{N_l}{E_k}}\Gamma\left(\frac{1+4\mu}{8\sigma^2}\right){}_1F_1\left(\frac{1+4\mu}{8\sigma^2}, \frac{3}{2}, \frac{e^{-j2\theta_l}y_{kl}^2(\tau)}{4E_kN_l}\right) \right)$$

lorsque les valeurs de délai et d'amplitude sont connues la métrique de décision utilisée est

$$\Lambda_k = \ln\left[ p\left( \{r_l(t)\}_{l=1}^{L\rho} \mid s_k(t), \{\alpha_l\}_{l=1}^{L\rho}, \{\tau_l\}_{l=1}^{L\rho} \right) \right] = K\sum_{l=1}^{L_p} \ln\left[ e^{-\frac{a_l^2 E_k}{N_l}} I_0\left(\frac{a_l}{N_l}|y_{kl}(\tau_l)|\right) \right]$$

lorsque seule la valeur de délai est connue la métrique de décision utilisée est

$$\Lambda_k = \ln\left[ p\left( \{r_l(t)\}_{l=1}^{L\rho} \mid s_k(t), \{\tau_l\}_{l=1}^{L\rho} \right) \right] \; ;$$

et
lorsque les valeurs de délai, d'amplitude et de phase sont inconnues la métrique de décision utilisée est

$$\Lambda_k = \ln\left[ p\left( \{r_l(t)\}_{l=1}^{L\rho} \mid s_k(t) \right) \right] =$$

$$\ln\left[ K(B-A)\prod_{l=1}^{L_p} \left(\frac{5}{2}\right)^{\frac{1}{8\sigma^2}} \frac{e^{-\frac{\mu^2}{2\sigma^2}}}{\sigma\sqrt{2\pi}} \Gamma\left(1 - \frac{1}{8\sigma^2} - \frac{\mu}{2\sigma^2}\right) \right] \frac{1}{2}\left[\frac{E_k}{N_l}\right]^{-\frac{1+4\mu}{8\sigma^2}} \Gamma\left(\frac{1+4\mu}{8\sigma^2}\right)$$

et

$$\ln\left[ \begin{array}{c} K(B-A)\prod_{l=1}^{L_p}\left(\frac{5}{2}\right)^{\frac{1}{8\sigma^2}}\frac{e^{\frac{\mu^2}{2\sigma^2}}}{4\sigma\pi\sqrt{2}}\Gamma\left(1-\frac{1}{8\sigma^2}-\frac{\mu}{2\sigma^2}\right)\left[\frac{E_k}{N}\right]^{\frac{1}{4}\frac{1}{8\sigma^2}+\frac{\mu}{8\sigma^2}}2^{\frac{1}{2}\frac{1}{8\sigma^2}-\frac{\mu}{2\sigma^2}}\sqrt{\frac{y_{kl}(\tau_l)}{N}} \\ \left(\Gamma\left(\frac{1+4\mu}{8\sigma^2}-\frac{1}{4}\right){}_1F_1\left(\frac{1+4\mu}{8\sigma^2}-\frac{1}{4},\frac{1}{2},\frac{y_{\mu}^2(T)}{4E_kN}\right)-\frac{y_{kl}(\tau)}{\sqrt{E_kN}}\Gamma\left(\frac{1+4\mu}{8\sigma^2}+\frac{1}{4}\right){}_1F_1\left(\frac{1+4\mu}{8\sigma^2}+\frac{1}{4},\frac{3}{2},\frac{y_{\mu}^2(T)}{4E_kN}\right)\right) \end{array} \right]$$

où $s_k(t)$ représente le signal en bande de base complexe $k_{th}$ correspondant choisi parmi l'ensemble de formes d'onde de message équi-probable M qui représente le signal de données transmis, $L_p$ représentent les voies de diversité indépendantes, et $\{a_l\}_{l=1}^{L_p}$, $\{\theta_l\}_{l=1}^{L_p}$ et $\{\tau_l\}_{l=1}^{L_p}$ représentent respectivement les valeurs d'amplitude, de phase et de délai,
et $\sigma$ et $\mu$ représentent la variance et la moyenne de la distribution logarithmique normale de déficiences du signal de données, et où

$$y_{k1}(T)=\int_0^T r_1(t+T)\,s_k^*(t)\,dt .$$

2. Récepteur de diffusion selon la revendication 1, dans lequel le récepteur est optimisé dans une pluralité de conditions par rapport à l'endroit géographique dans lequel le récepteur doit être utilisé.

3. Récepteur de diffusion selon la revendication 1, dans lequel la déficience de signal de données est relative au déclin du canal de signal de données.

4. Récepteur de données de diffusion selon la revendication 1, dans lequel la configuration du récepteur inclut des détails liés à la détection cohérente ainsi qu'à la détection non cohérente.

5. Récepteur de diffusion selon la revendication 1, dans lequel la configuration du récepteur inclut des détails de schémas de modulation possibles à utiliser.

6. Récepteur de diffusion selon la revendication 1, dans lequel le récepteur est configuré pour recevoir des signaux de données qui sont fournis en utilisant des mises en forme d'impulsion.

7. Récepteur de données de diffusion comprenant un appareil de réception qui a été configuré en référence à une métrique décision selon la revendication 1.

8. Procédé de configuration d'appareil de réception et/ou de traitement pour au moins un signal de données reçu à partir d'un endroit de transmission éloigné, $r_1(t)$, ledit procédé comprenant les étapes consistant à :

identifier le signal de données qui doit être reçu et dans lequel ledit appareil est en outre configuré en référence à une métrique de décision dérivée de l'utilisation de la fonction de densité de probabilité d'une distribution de Suzuki de façon à prendre en compte une déficience potentielle dudit signal de données et la sélection de la métrique de décision utilisée porte sur la question de savoir si toute valeur ou toute combinaison de valeurs pour la phase, le délai et/ou l'amplitude dudit signal de données est connue, **caractérisé en ce que** lorsque les valeurs de phase et de délai sont connues la métrique de décision utilisée est

$$\Lambda_k = \ln\left[ p\left( \{r_l(t)\}_{l=1}^{Lp} \bigg| s_k(t),\{\theta_l\}_{l=1}^{Lp},\{\tau_l\}_{l=1}^{Lp} \right) \right] ;$$

lorsque seule la valeur de phase est connue les métriques de décision utilisées sont

$$\Lambda_k = \ln\left[p\left(\left\{r_l(t)\right\}_{l=1}^{Lp}\Big|s_k(t),\left\{\theta_l\right\}_{l=1}^{Lp}\right)\right] =$$

$$\ln\left(K(B-A)\prod_{l=1}^{L_p}\left(\frac{5}{2}\right)^{\frac{1}{8\sigma^2}}\frac{e^{-\frac{\mu^2}{2\sigma^2}}}{2\sigma\sqrt{2n}}\Gamma\left(1-\frac{1}{8\sigma^2}-\frac{\mu}{2\sigma^2}\right)\left[\frac{N_l}{E_k}\right]^{-1+\frac{1+4\mu}{4\sigma^2}}\Gamma\left(\frac{1+4\mu}{8\sigma^2}-\frac{1}{2}\right)\right.$$
$$\left._1F_1\left(\frac{1+4\mu}{8\sigma^2}-\frac{1}{2},\frac{1}{2},\frac{e^{-j2\theta_l}y_{kl}^2(\tau)}{4E_k N_l}\right)+\left[\frac{e^{-j\theta_l}y_{kl}(\tau)}{N_l}\right]\sqrt{\frac{N_l}{E_k}}\Gamma\left(\frac{1+4\mu}{8\sigma^2}\right)_1F_1\left(\frac{1+4\mu}{8\sigma^2},\frac{3}{2},\frac{e^{-j2\theta_l}y_{kl}^2(\tau)}{4E_k N_l}\right)\right)$$

et

$$\Lambda_k = \ln\left[p\left(\left\{r_l(t)\right\}_{l=1}^{Lp}\Big|s_k(t),\left\{\theta_l\right\}_{l=1}^{Lp}\right)\right] =$$

$$\ln\left(K(B-A)\prod_{l=1}^{L_p}\left(\frac{5}{2}\right)^{\frac{1}{8\sigma^2}}\frac{e^{-\frac{\mu^2}{2\sigma^2}}}{2\sigma\sqrt{2n}}\Gamma\left(1-\frac{1}{8\sigma^2}-\frac{\mu}{2\sigma^2}\right)\left[\frac{N_l}{E_k}\right]^{-1+\frac{1+4\mu}{4\sigma^2}}\Gamma\left(\frac{1+4\mu}{8\sigma^2}-\frac{1}{2}\right)*2^{1-\frac{1}{8\sigma^2}-\frac{\mu}{2\sigma^2}}\right.$$
$$\left._1F_1\left(\frac{1+4\mu}{8\sigma^2}-\frac{1}{2},\frac{1}{2},\frac{e^{-j2\theta_l}y_{kl}^2(\tau)}{4E_k N_l}\right)+\left[\frac{e^{-j\theta_l}y_{kl}(\tau)}{N_l}\right]\sqrt{\frac{N_l}{E_k}}\Gamma\left(\frac{1+4\mu}{8\sigma^2}\right)_1F_1\left(\frac{1+4\mu}{8\sigma^2},\frac{3}{2},\frac{e^{-j2\theta_l}y_{kl}^2(\tau)}{4E_k N_l}\right)\right)$$

lorsque les valeurs de délai et d'amplitude sont connues la métrique de décision utilisée est

$$\Lambda_k = \ln\left[p\left(\left\{r_l(t)\right\}_{l=1}^{Lp}\Big|s_k(t),\left\{\alpha_l\right\}_{l=1}^{Lp},\left\{\tau_l\right\}_{l=1}^{Lp}\right)\right] = K\sum_{l=1}^{L_p}\ln\left[e^{-\frac{\alpha_l^2 E_k}{N_l}}I_0\left(\frac{\alpha_l}{N_l}|y_{kl}(\tau_l)|\right)\right]$$

lorsque seule la valeur de délai est connue la métrique de décision utilisée est

$$\Lambda_k = \ln\left[p\left(\left\{r_l(t)\right\}_{l=1}^{Lp}\Big|s_k(t),\left\{\tau_l\right\}_{l=1}^{Lp}\right)\right] \; ; \text{ et}$$

lorsque les valeurs de délai, d'amplitude et de phase sont inconnues la métrique de décision utilisée est

$$\Lambda_k = \ln\left[p\left(\left\{r_l(t)\right\}_{l=1}^{Lp}\Big|s_k(t)\right)\right] =$$

$$\ln\left[K(B-A)\prod_{l=1}^{L_p}\left(\frac{5}{2}\right)^{\frac{1}{8\sigma^2}}\frac{e^{-\frac{\mu^2}{2\sigma^2}}}{\sigma\sqrt{2n}}\Gamma\left(1-\frac{1}{8\sigma^2}-\frac{\mu}{2\sigma^2}\right)\right]\frac{1}{2}\left[\frac{E_k}{N_l}\right]^{-\frac{1+4\mu}{8\sigma^2}}\Gamma\left(\frac{1+4\mu}{8\sigma^2}\right)$$

et

$$-\ln\left[\begin{array}{c} K(B-A)\prod_{l=1}^{L_p}\left(\frac{5}{2}\right)^{\frac{1}{8\sigma^2}}\frac{e^{\frac{\mu^2}{2\sigma^2}}}{4\sigma\sqrt{2}}\Gamma\left(1-\frac{1}{8\sigma^2}-\frac{\mu}{2\sigma^2}\right)\left[\frac{E_k}{N}\right]^{\frac{1}{4}-\frac{1+4\mu}{8\sigma^2}}2^{\frac{1}{2}\frac{1}{8\sigma^2}-\frac{\mu}{2\sigma^2}}\sqrt{\frac{|y_{kl}(\tau_l)|}{N}} \\ \left(\Gamma\left(\frac{1+4\mu}{8\sigma^2}-\frac{1}{4}\right){}_1F_1\left(\frac{1+4\mu}{8\sigma^2}-\frac{1}{4},\frac{1}{2},\frac{y_{kl}^2(\tau)}{4E_kN}\right)-\frac{y_{kl}(\tau)}{\sqrt{E_kN}}\Gamma\left(\frac{1+4\mu}{8\sigma^2}+\frac{1}{4}\right){}_1F_1\left(\frac{1+4\mu}{8\sigma^2}+\frac{1}{4},\frac{3}{2},\frac{y_{kl}^2(\tau)}{4E_kN}\right)\right) \end{array}\right]$$

où $s_k(t)$ représente le signal en bande de base complexe $k_{th}$ choisi parmi l'ensemble de formes d'onde de message équi-probable M qui représente le signal de données transmis, $L_p$ représentent les voies de diversité indépendantes, et $\{a_l\}_{l=1}^{L_p}$, $\{\theta_l\}_{l=1}^{L_p}$ et $\{\tau_l\}_{l=1}^{L_p}$ représentent respectivement les valeurs d'amplitude, de phase et de délai, et $\sigma$ et $\mu$ représentent la variance la moyenne respectivement de la distribution logarithmique normale de déficiences du signal de données, et où

$$y_{k1}(T)=\int_0^T r_1(t+T)s_k^*(t)\,dt.$$

9. Procédé selon la revendication 8, dans lequel le procédé inclut l'étape consistant à identifier l'endroit géographique au niveau duquel ledit appareil doit être utilisé.

FIG. 1

**FIG. 2**

FIG. 3

FIG. 4

**EP 2 369 801 B1**

**Non-patent literature cited in the description**

- **COULSON AJ et al.** Improving fading distribution for mobile radio. *Proceedings of IEE,* 16 June 1998, vol. 145 (3), 197-202